# EUROPEAN PATENT APPLICATION

(11) **EP 4 556 913 A1**
(43) Date of publication of application: **21.05.2025**
(21) Application number: 24213524.2
(22) Date of filing: 18.11.2024
(51) Int. Cl.: G01N 35/00

(54) **SPECIMEN MEASUREMENT APPARATUS AND SPECIMEN MEASUREMENT METHOD**

(30) Priority: 20.11.2023 JP 2023196945
(71) Applicant: SYSMEX CORPORATION, Kobe-shi Hyogo 651-0073 (JP)
(72) Inventor: NAKATSUKA, Hisashi, Kobe-shi, Hyogo, 651-0073 (JP)
(74) Representative: Hoffmann Eitle

(57) **Abstract**

Disclosed is a specimen measurement apparatus configured to measure a specimen, including: a housing; a first rack tray configured to store therein a rack capable of holding a plurality of specimen containers, the first rack tray being able to be taken in and out with respect to the housing; a second rack tray configured to store therein a rack capable of holding a plurality of specimen containers, the second rack tray being able to be taken in and out with respect to the housing, independently from the first rack tray; and a controller programmed to perform a process related to measurement of the specimen, according to a normal mode or an urgent mode that is set as specimen measurement mode for each of the racks, the urgent mode being higher in urgency in measurement than the normal mode. When a rack in the normal mode and a rack in the urgent mode are stored in the housing, the controller preferentially performs measurement of the specimen held in the rack in the urgent mode.

## Description

### CROSS REFERENCE TO RELATED APPLICATIONS

This application claims priority from prior Japanese Patent Application No. 2023-196945, filed on November 20, 2023, entitled "SPECIMEN MEASUREMENT APPARATUS AND SPECIMEN MEASUREMENT METHOD", the entire content of which is incorporated herein by reference.

### FIELD OF THE INVENTION

The present invention relates to a specimen measurement apparatus and a specimen measurement method.

### BACKGROUND OF THE INVENTION

In measuring specimens, when measurement of an urgent specimen having a high urgency is required during measurement of a normal specimen, it is desired to easily and quickly perform interruption measurement of such an urgent specimen.

Japanese Laid-Open Patent Publication No. 2001-099840 discloses an apparatus in which a specimen type such as a normal specimen, an urgent specimen, an accuracy management specimen, or the like is set for each of specimen installation positions in a rack. Japanese Laid-Open Patent Publication No. 2001-099840 describes that, when a cup installed in a rack has a barcode seal attached thereto, the specimen type is automatically set with respect to the installation position in the rack according to barcode information, and when there is a cup having no barcode seal attached thereto, the specimen type can be set by manually inputting a specimen identification number.

### SUMMARY OF THE INVENTION

When the interruption measurement of the urgent specimen is performed in the apparatus described in Japanese Laid-Open Patent Publication No. 2001-099840, the barcode seal in which the specimen type is stored needs to be prepared and pasted to the cup, or the specimen type needs to be manually inputted by an operator. This increases the workload on the operator, and may cause errors such as incorrect inputs. Therefore, it has been desired to improve the operation of interruption measurement of an urgent specimen.

A specimen measurement apparatus (1) according to the present invention is a specimen measurement apparatus (1) configured to measure a specimen, and including: a housing (10); a first rack tray (65a) configured to store therein a rack (66) capable of holding a plurality of specimen containers (67), the first rack tray (65a) being able to be taken in and out with respect to the housing (10); a second rack tray (65b) configured to store therein a rack (66) capable of holding a plurality of specimen containers (67), the second rack tray (65b) being able to be taken in and out with respect to the housing (10), independently from the first rack tray (65a); and a controller (57) programmed to perform a process related to measurement of the specimen, according to a normal mode or an urgent mode that is set as a specimen measurement mode for each of the racks, the urgent mode being higher in urgency in measurement than the normal mode. When a rack (66) in the normal mode and a rack (66) in the urgent mode are stored in the housing (10), the controller (57) preferentially performs measurement of the specimen held in the rack (66) in the urgent mode.

A specimen measurement method according to the present invention includes: setting a normal mode or an urgent mode as a specimen measurement mode for each of racks each capable of holding a plurality of specimen containers (67), the urgent mode being higher in urgency in measurement than the normal mode; and storing a first rack tray (65a) and a second rack tray (65b) in a housing (10), the first rack tray (65a) and the second rack tray (65b) being configured to store therein a rack (66) that holds specimen containers (67), and be able to be taken in and out with respect to the housing (10), independently from each other. When a rack (66) in the normal mode and a rack (66) in the urgent mode are stored in the housing (10), measurement of the specimen held in the rack (66) in the urgent mode is preferentially performed.

According to the specimen measurement apparatus and the specimen measurement method of the present invention, interruption measurement of an urgent specimen can be easily and quickly performed.

### BRIEF DESCRIPTION OF THE DRAWINGS

FIG. 1 shows an appearance of a specimen measurement apparatus;
FIG. 2 shows a state in which a specimen rack tray is drawn out from a housing;
FIG. 3 shows an internal configuration of the specimen measurement apparatus;
FIG. 4 shows an appearance of a measurement part;
FIG. 5 shows an internal configuration of the measurement part;
FIG. 6 shows a configuration of a detector;
FIG. 7 is a block diagram regarding control of the specimen measurement apparatus;
FIG. 8 shows a configuration of a dispenser;
FIG. 9 shows a configuration of a container holding part;
FIG. 10 shows configurations of specimen rack trays and a specimen rack;
FIG. 11 shows a state in which the specimen rack tray is stored in a specimen rack storage part;
FIG. 12 shows a state in which the specimen rack tray is stored in the specimen rack storage part;
FIG. 13 shows a state in which the specimen rack tray is drawn out from the specimen rack storage part;
FIG. 14 shows a state in which the specimen rack tray is drawn out from the specimen rack storage part;
FIG. 15 is a flowchart showing a specimen measurement process;
FIG. 16 shows a main menu window;
FIG. 17 shows an order window;
FIG. 18 shows the order window in a state where an urgent mode is selected and a specimen rack in the urgent mode is drawn into the specimen rack storage part;
FIG. 19 is a flowchart showing a procedure of take-out, placement, and measurement mode setting for the specimen rack;
FIG. 20 is a flowchart showing a procedure of loading of the specimen rack into the specimen rack storage part;
FIG. 21 illustrates the urgent mode;
FIG. 22 illustrates the urgent mode;
FIG. 23 shows a modification of the specimen rack storage part;
FIG. 24 shows a modification of the main menu window;
FIG. 25 shows a modification of a method for determining a priority of specimen measurement;
FIG. 26 shows a modification of the order window; and
FIG. 27 shows a modification of the urgent mode.

### DETAILED DESCRIPTION

Hereinafter, a specimen measurement apparatus and a specimen measurement method according to an exemplary embodiment of the present invention will be described with reference to the drawings.

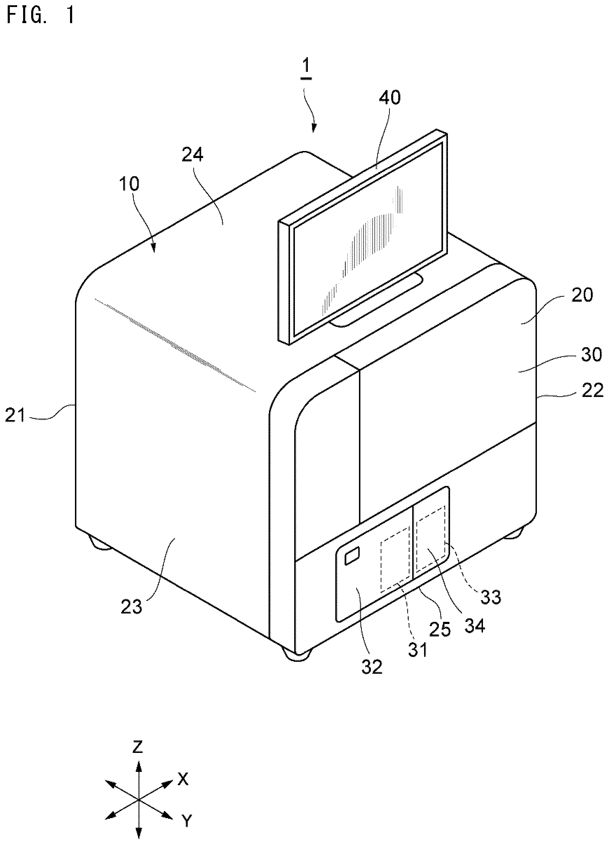

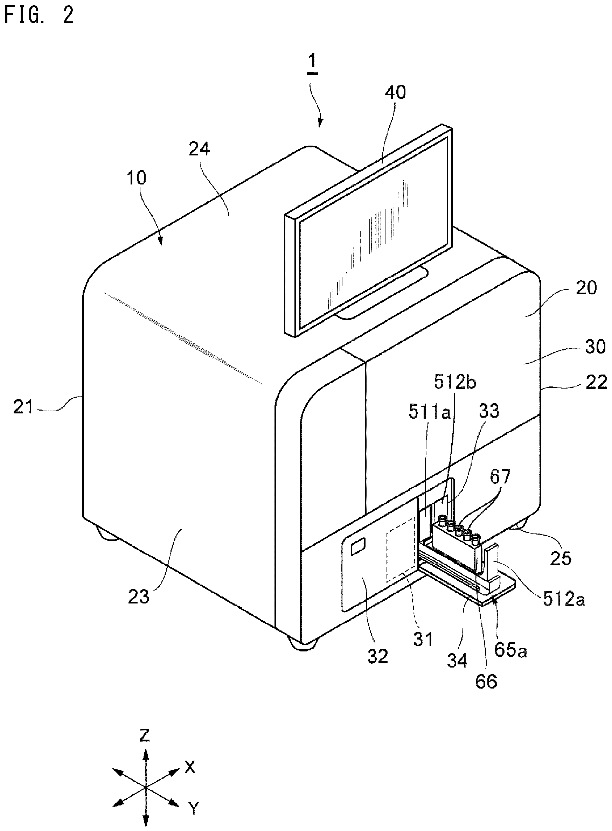

FIG. 1 and FIG. 2 are perspective views each showing an appearance of a specimen measurement apparatus 1 according to the present embodiment. The specimen measurement apparatus 1 is used for blood coagulation measurement for analyzing activity of a coagulation factor of a specimen (blood specimen).

The specimen measurement apparatus 1 has a substantially rectangular parallelepiped shape, and includes a housing 10 and a monitor 40. The housing 10 includes a front surface part 20, a rear surface part 21, a right side surface part 22, a left side surface part 23, an upper surface part 24, and a bottom surface part 25. The monitor 40 is disposed on the upper surface part 24 of the housing 10. In the present specification, "left" and "right" of the specimen measurement apparatus 1 are based on the direction when the front surface part 20 is seen from the front.

An openable/closable cover 30 is disposed on an upper portion of the front surface part 20 of the housing 10, and a user can access the inside of the housing 10 by opening the cover 30. An opening 31 for taking in and out a reagent rack with respect to a reagent rack storage part 52 described later, and a lid 32 for opening and closing the opening 31, are disposed on a lower portion of the front surface part 20. On the lower portion of the front surface part 20, an opening 33 for taking in and out a reagent rack with respect to a specimen rack storage part 50, and a lid 34 for opening and closing the opening 33, are disposed adjacent to the opening 31 and the lid 32, respectively. The lid 34 is configured to close the opening 33 by being urged toward the housing 10 by a spring, and open the opening 33 when external force resisting the urging force is applied to the lid 34.

The monitor 40 also functions as an input part for inputting information required for specimen measurement. The monitor 40 is a display that displays a plurality of operation windows such as a main menu window 600 and an order window 700. The monitor 40 is, for example, a touch panel type display, and displays various kinds of information for operations required for specimen measurement, and information on the result of the specimen measurement.

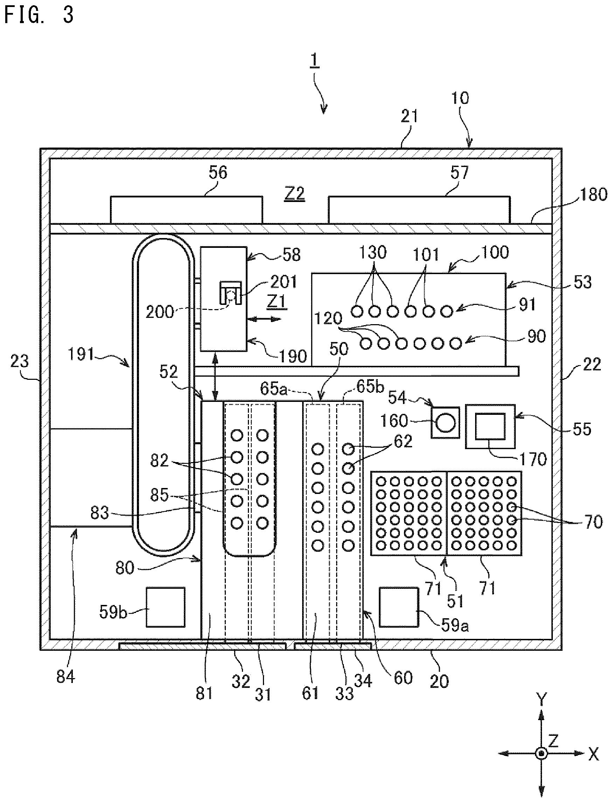

As shown in FIG. 3, the housing 10 has a vertical wall 180 disposed on the rear surface part 21 side relative to the center in the front-rear direction Y. The vertical wall 180 has a plate shape with plate surfaces facing in the front-rear direction Y. The vertical wall 180 separates the inside of the housing 10 into a main area Z1 and a rear surface area Z2. In the main area Z1, a specimen rack storage part 50, a reaction container storage part 51, a reagent rack storage part 52, a measurement part 53, a washing part 54, a disposal part 55, a dispensing part 58, and information reading devices 59a, 59b are disposed. A power supply 56 and a controller 57 are mounted to a surface, facing the rear surface area Z2, of the vertical wall 180. The vertical wall 180 is formed of, for example, a material having low heat conductivity, and reduces influence of heat of the controller 57 on the measurement part 53.

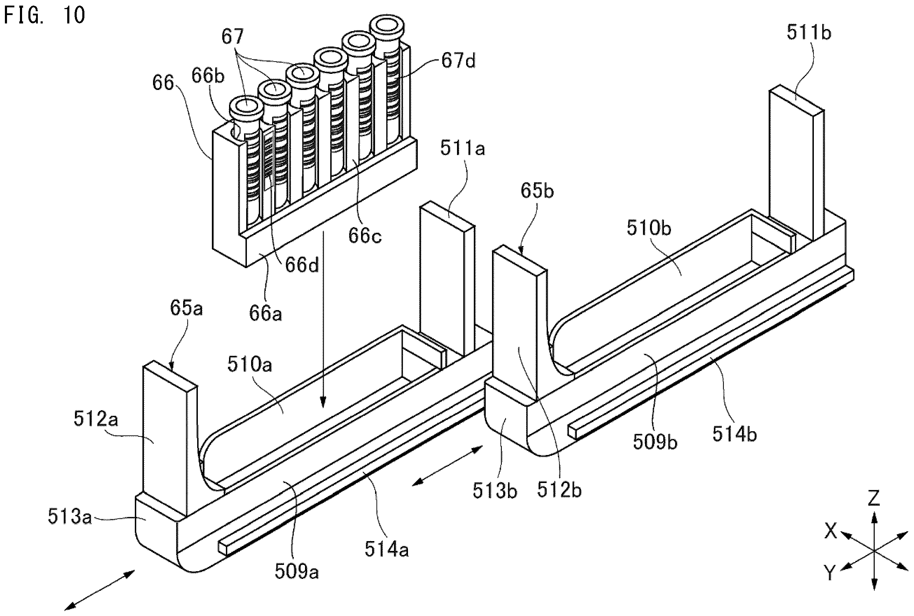

The specimen rack storage part 50 is a part in which a specimen rack 66 is set. As specifically described later, the specimen rack storage part 50 includes a pair of specimen rack trays 65a, 65b that can be taken in and out with respect to the housing 10 independently from each other (see FIG. 10). The controller 57 controls the specimen measurement apparatus 1 to execute a series of processes on a specimen held in the specimen rack storage part 50 on the basis of a specimen measurement mode.

The reaction container storage part 51 is disposed to the right of the specimen rack storage part 50, specifically, is disposed on the front surface part 20 side relative to the center in the front-rear direction Y of the housing 10 and on the right side relative to the center in the left-right direction X of the housing 10. The reaction container storage part 51 stores therein container racks 71 holding a plurality of reaction containers 70. The reagent rack storage part 52 and a second information reading device 59b are disposed to the left of the specimen rack storage part 50. A first information reading device 59a reads identification information of the specimen racks stored in the specimen rack storage part 50 and identification information of specimen containers held in the specimen racks. In addition, the second information reading device 59b reads identification information of reagent containers held in the reagent racks.

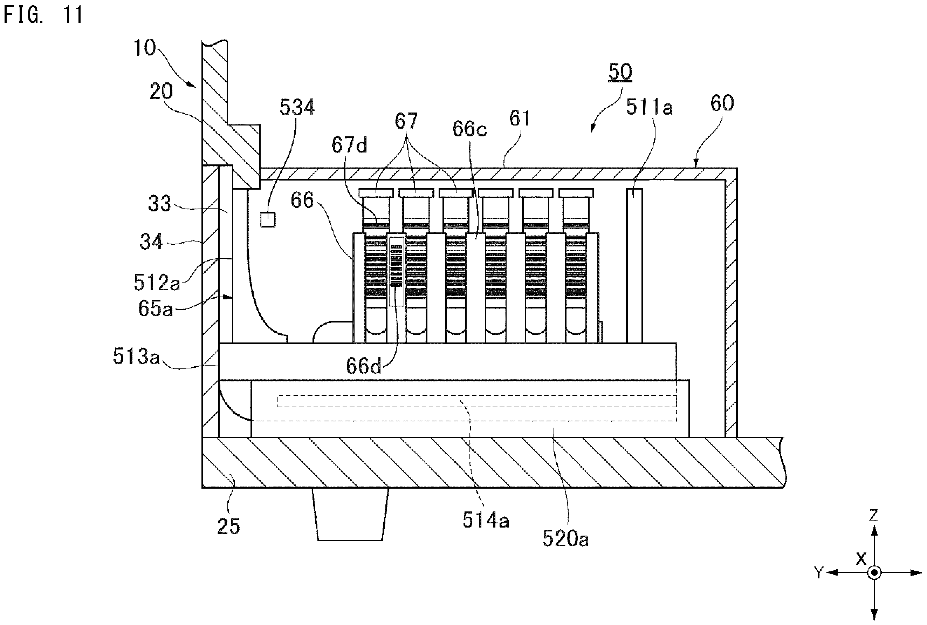

The specimen rack storage part 50 is disposed on the front surface part 20 side relative to the center in the front-rear direction Y of the housing 10, and near the center in the left-right direction X of the housing 10. The specimen rack storage part 50 stores therein specimen racks 66 each holding a plurality of specimen containers. The specimen rack storage part 50 is covered with a cover member 60 (see FIG. 11). The cover member 60 functions as a light blocking wall that prevents external light from the outside of the housing 10 from reaching the measurement part 53. The cover member 60 has an upper surface portion 61, and a plurality of dispensing holes 62 are formed in the upper surface portion 61. A later-described pipette 200 of the dispensing part 58 enters the specimen rack storage part 50 through a dispensing hole 62, and suctions the specimen stored in a specimen container inside the specimen rack storage part 50.

A pair of specimen rack trays 65a, 65b, on which specimen racks are placed, are stored in the specimen rack storage part 50. In the specimen rack storage part 50, the pair of specimen rack trays 65a, 65b are disposed side by side so as to be adjacent to each other in the left-right direction X. That is, the specimen rack storage part 50 has a space that allows the two specimen rack trays 65a, 65b to be disposed in the left-right direction X. As specifically described later, the specimen rack storage part 50 includes an actuator that moves the pair of specimen rack trays 65a, 65b independently from each other in the front-rear direction Y, and is configured to be able to take in and out the two specimen rack trays 65a, 65b independently from each other on the basis of an operation performed on the monitor 40 by the user.

The reagent rack storage part 52 is disposed on the front surface part 20 side relative to the center in the front-rear direction Y of the housing 10, and on the left side relative to the center in the left-right direction X of the housing 10. The reagent rack storage part 52 is disposed to the left of the specimen rack storage part 50. The reagent rack storage part 52 stores therein a reagent rack holding a plurality of reagent containers. Each reagent container is a cylindrical container having a bottom, in which a reagent for preparing a measurement sample is stored. The reagent container is provided with reagent identification information that can be read by the second information reading device 59b.

The reagent rack storage part 52 is covered with a cover member 80. The cover member 80, similar to the cover member 60, functions as a light blocking wall that prevents external light from the outside of the housing 10 from reaching the measurement part 53. The cover member 80 has an upper surface portion 81, and a plurality of dispensing holes 82 are formed in the upper surface portion 81. The pipette 200 (described later) of the dispensing part 58 enters the reagent rack storage part 52 through a dispensing hole 82, and suctions a reagent stored in a reagent container inside the reagent rack storage part 52. The reagent rack storage part 52 includes a cooling part 83 for cooling the reagent containers, and a heat discharging part 84 for discharging heat generated by the cooling part 83 to the outside of the housing 10.

In the reagent rack storage part 52, reagent rack trays 85 capable of holding reagent racks are disposed. In the reagent rack storage part 52, two reagent rack trays 85 are disposed side by side so as to be adjacent to each other in the left-right direction X. The reagent rack storage part 52 may have an electric actuator for moving the reagent rack trays 85 in the front-rear direction Y. However, in the present embodiment, the user inserts the reagent rack trays 85 into the reagent rack storage part 52, and draws the reagent rack trays 85 from the reagent rack storage part 52, whereby the reagent rack trays 85 can be taken in and out with respect to the reagent rack storage part 52. The two reagent rack trays 85 can be taken in and out independently from each other.

The washing part 54 is disposed between the measurement part 53 and the reaction container storage part 51. The washing part 54 includes a washing chamber 160 that washes the pipette 200 of the dispensing part 58. The disposal part 55 is disposed between the measurement part 53 and the reaction container storage part 51. The disposal part 55 has a disposal port 170 through which the reaction containers 70 are discarded. The power supply 56 is disposed, in the rear surface area Z2, on the left side relative to the center in the left-right direction X of the housing 10. The power supply 56 converts power supplied from an external power supply into an appropriate voltage or waveform, and supplies the voltage to the various devices, such as the controller 57 in the rear surface area Z2, and the specimen rack storage part 50, the reagent rack storage part 52, the measurement part 53, the dispensing part 58, etc., in the main area Z1.

The dispensing part 58 has a function of performing dispensing to the specimen containers 67, the reaction containers 70, and the reagent containers. The dispensing part 58 includes a dispenser 190, and a movement unit 191 that moves the dispenser 190. The movement unit 191 is configured to transfer the entirety of the dispenser 190 to any position in the left-right direction X and the front-rear direction Y inside the housing 10. A container holding part 201 of the dispenser 190 is allowed to move in the housing 10 by the movement unit 191.

FIG. 3 shows a state in which the left-side specimen rack tray 65a is drawn out from the housing 10. The lid 34 is pushed by the specimen rack tray 65a and opened against the urging force when the specimen rack tray 65a is drawn out from the housing 10, and is closed by the urging force when the specimen rack tray 65a is stored in the housing 10. The lid 34 is pushed by the specimen rack tray 65b and opened against the urging force when the specimen rack tray 65b is drawn out from the housing 10, and is closed by the urging force when the specimen rack tray 65b is stored in the housing 10. Thus, the lid 34 can perform opening and closing operations of the opening 33, interlocking with the movements of the specimen rack trays 65a, 65b.

Each of the specimen rack trays 65a, 65b has an elongated, substantially rectangular shape in a plan view, and is disposed such that the length direction thereof is along the front-rear direction Y (see FIG. 10). The specimen rack tray 65a includes a rear light-blocking wall 511a that is disposed at a first end portion, in the length direction of the tray, located on the rear side of the housing 10, and includes a front light-blocking wall 512a that is disposed at a second end portion, in the length direction of the tray, located on the front side of the housing 10. In the present embodiment, one specimen rack 66 is placed on the specimen rack tray 65a. Since the specimen rack tray 65b has substantially the same structure as the specimen rack tray 65a, repeated description is not necessary. The specimen rack 66 has an elongated, substantially rectangular shape in a plan view, and is placed on the specimen rack tray 65a, 65b such that the length direction thereof is along the front-rear direction Y. The specimen rack 66 has a structure capable of holding a plurality of specimen containers 67 such that the specimen containers 67 are aligned in the front-rear direction Y.

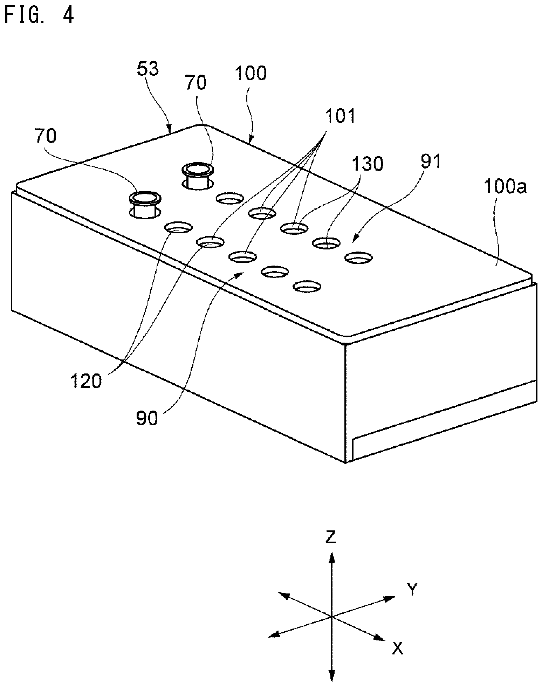

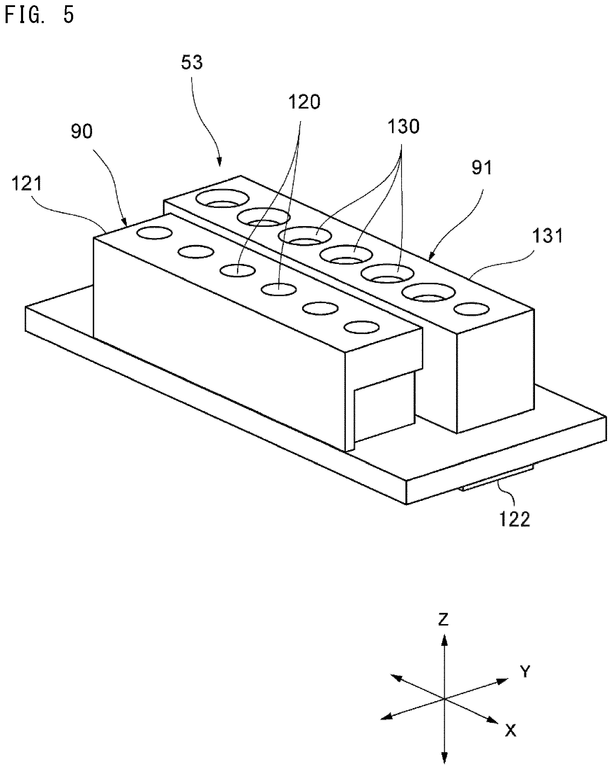

FIG. 4 shows an appearance of the measurement part 53, and FIG. 5 shows an internal structure of the measurement part 53. As shown in FIG. 4, the measurement part 53 includes a cover member 100 that covers a heating part 90 and a detection part 91. The cover member 100 has a substantially rectangular parallelepiped shape. A plurality of holes 101 are formed in an upper surface portion 100a of the cover member 100. The heating part 90 and the detection part 91 are disposed on the rear surface part 21 side relative to the center in the front-rear direction Y of the housing 10, and on the right side relative to the center of the left-right direction X of the housing 10 (see FIG. 2).

As shown in FIG. 5, the heating part 90 has a first holder 121 inside the cover member 100. The first holder 121 has a rectangular parallelepiped shape elongated in the left-right direction X. The first holder 121 has a plurality of holding holes 120 for holding reaction containers 70. The plurality of holding holes 120 are aligned in the left-right direction X. The holding holes 120 communicate with the holes 101 formed in the upper surface portion 100a of the cover member 100. The heating part 90 can heat the reaction containers 70 held in the holding holes 120 by using a heat source 122.

The detection part 91 has a second holder 131 inside the cover member 100. The second holder 131 has a rectangular parallelepiped shape elongated in the left-right direction X. The second holder 131 has a plurality of holding holes 130 for holding reaction containers 70. The plurality of holding holes 130 are aligned in the left-right direction X. The second holder 131 is disposed on the rear surface part 21 side with respect to the first holder 121. The holding holes 130 are opened upward, communicate with the holes 101 formed in the upper surface portion 100a of the cover member 100, and are capable of receiving and holding the reaction containers 70. Since the holding holes 130 are opened upward, light from the outside of the cover member 100 enters the holding holes 130, and can reach a detector 141 described later.

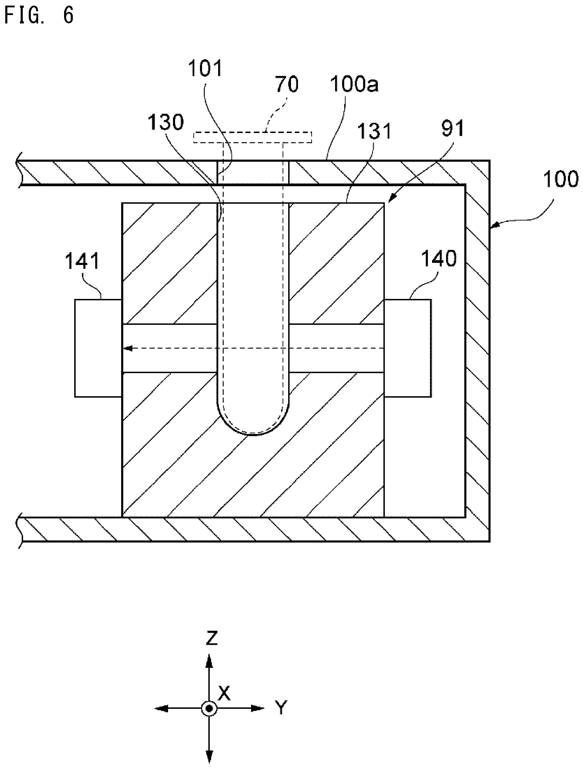

FIG. 6 is a cross-sectional view of the detection part 91. As shown in FIG. 6, the detection part 91 includes a light source 140 that applies light to the reaction containers 70 held by the second holder 131, and a detector 141 that detects light transmitted through the reaction containers 70. The detection part 91 applies light from the light source 140 to a measurement sample that is prepared from a specimen and a reagent and is stored in each reaction container 70, and measures optical information of the measurement sample by detecting, with the detector 141, light transmitted through the measurement sample.

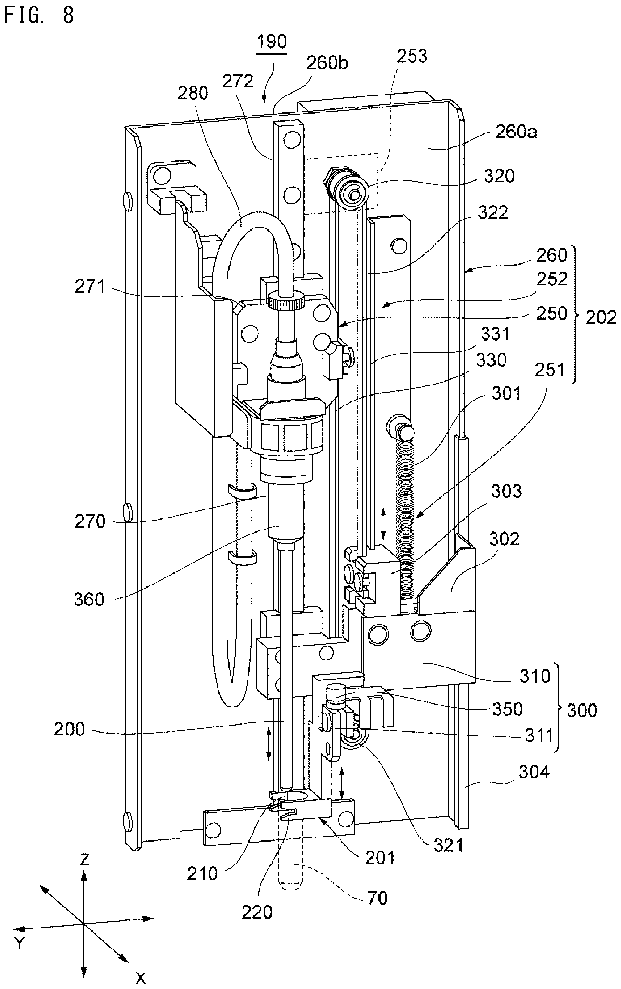

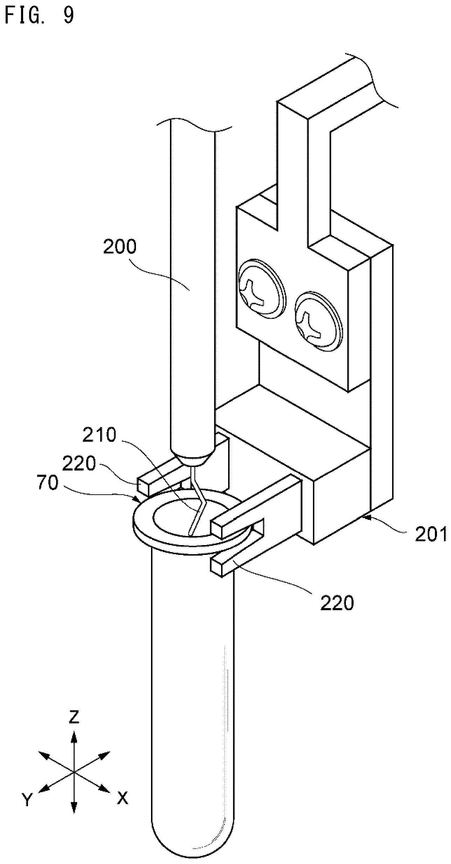

FIG. 8 is a perspective view of the dispenser 190. FIG. 9 is a perspective view of the container holding part 201 as a component of the dispenser 190. As shown in FIG. 8 and FIG. 9, the dispenser 190 includes the pipette 200, the container holding part 201, and a movement mechanism 202.

The pipette 200 is a thin and long tube expandable in the vertical direction Z, and can retain a predetermined amount of liquid in the tube. The pipette 200 is configured to be able to suction liquid from a tip portion 210, and discharge the suctioned liquid.

The container holding part 201 has two (a pair of) holding arms 220 for holding a reaction container 70. The holding arms 220 are disposed below the pipette 200, and can hold the reaction container 70 coaxially with the pipette 200 in the vertical direction Z. The pipette 200 is thinner than the gap between the two holding arms 220 of the container holding part 201, and is insertable in the gap between the two holding arms 220 in the vertical direction Z.

The movement mechanism 202 moves the pipette 200 and the container holding part 201 relatively in the vertical direction Z with the holding arms 220 and the pipette 200 being maintained coaxially.

The movement mechanism 202 has a mechanical configuration in which, when one of the pipette 200 and the container holding part 201 moves up, the other moves down interlocking with it. Moreover, the movement mechanism 202 has a mechanical configuration as follows. That is, the pipette 200 moves down, and the container holding part 201 moves up, interlocking with the pipette 200. When the container holding part 201 has moved up to a predetermined position, the interlock is released, and the pipette 200 moves down with the upward movement of the container holding part 201 being stopped. Hereinafter, an example of the mechanical configuration will be described.

The movement mechanism 202 includes a first movement part 250 for moving the pipette 200 in the vertical direction Z, a second movement part 251 for moving the container holding part 201 in the vertical direction Z, an interlocking part 252 for interlocking the first movement part 250 with the second movement part 251, and a drive source 253 for driving the interlocking part 252.

The movement mechanism 202 includes a substantially rectangular plate-shaped member 260. The plate-shaped member 260 is erected with its plate surfaces facing in the left-right direction X. The first movement part 250, the second movement part 251, and the interlocking part 252 are disposed on a first plate surface 260a on the right side in the left-right direction X of the plate-shaped member 260. The drive source 253 is disposed on a second plate surface 260b on the left side in the left-right direction X of the plate-shaped member 260.

The first movement part 250 includes a pipette holding member 270 that holds the pipette 200, and a first lifting member 271 to which the pipette holding member 270 is fixed and which is moved up and down by the interlocking part 252.

A pipe 280 for supplying air into the pipette 200 and performing suction is connected to an upper portion of the pipette holding member 270. The pipe 280 communicates with a pump system.

The first lifting member 271 has a plate shape. The pipette holding member 270 is fixed to a plate surface on the right side, in the left-right direction X, of the first lifting member 271.

The first lifting member 271 is movably mounted to a first guide rail 272 that is disposed in the vertical direction Z of the plate-shaped member 260. The first lifting member 271 is mounted to a belt 322 described later.

The second movement part 251 includes: a second lifting member 300 that has the container holding part 201 fixed thereto, and is movable up and down; an urging member 301 that urges the second lifting member 300 upward; a stopper 302 that stops upward movement of the second lifting member 300; and a pressing member 303 that is moved up and down by the interlocking part 252, and can press the second lifting member 300 downward.

The second lifting member 300 includes a body portion 310, and an arm portion 311 that connects the body portion 310 and the container holding part 201.

The second lifting member 300 is movably mounted to a second guide rail 304 that is disposed in the vertical direction Z of the plate-shaped member 260.

The urging member 301 is a spring that is disposed in the vertical direction Z. The urging member 301 has an upper end that is fixed to a position, in the plate-shaped member 260, above the second lifting member 300, and a lower end that is fixed to an upper portion of the second lifting member 300. The urging member 301 urges the second lifting member 300 upward.

The stopper 302 is disposed at a position, in the plate-shaped member 260, above the second lifting member 300. When the second lifting member 300 moves up to a predetermined upper-limit position, that is, a predetermined position at which the pipette 200 is inserted in the reaction container 70 held by the holding arm 220 of the container holding part 201 (the position shown in FIG. 8 and FIG. 9), the stopper 302 comes into contact with the upper portion of the second lifting member 300 and stops the upward movement of the second lifting member 300.

The pressing member 303 is disposed at a position above the second lifting member 300. The pressing member 303 is mounted to a belt 322 described later, and is movable up and down by the belt 322. The pressing member 303 can press the second lifting member 300 downward when it moves down, and can move up to a position higher than the upper-limit position of the second lifting member 300.

The second movement part 251 is configured such that, when moving the container holding part 201 downward, the pressing member 303 is moved down by the interlocking part 252, and the second lifting member 300 is pressed downward against the urging force of the urging member 301. Furthermore, the second movement part 251 is configured as follows. That is, when moving the container holding part 201 upward, the pressing member 303 is moved up by the interlocking part 252, and the second lifting member 300 is moved up by the urging force of the urging member 301. When the container holding part 201 has moved up to a predetermined position, the stopper 302 stops the upward movement of the second lifting member 300.

The interlocking part 252 includes a pair of pulleys 320, 321 disposed in the vertical direction Z, and an annular belt 322 wound around the pair of pulleys 320, 321.

The pair of pulleys 320, 321 are disposed vertically on the plate-shaped member 260. The pair of pulleys 320, 321 are disposed, in the front-rear direction Y, between the first guide rail 272 of the first movement part 250 and the second guide rail 304 of the second movement part 251. The pulley 320 is disposed near the upper portion of the plate-shaped member 260, and the pulley 321 is disposed near the lower portion of the plate-shaped member 260.

The belt 322 is wound around the pair of pulleys 320, 321, and belt portions 330, 331 opposed to each other in the front-rear direction Y through the pulleys 320, 321 are moved up and down in opposite directions.

The first movement part 250 is driven by the belt portion 330. That is, the first lifting member 271 is mounted to the belt portion 330, and the first lifting member 271, the pipette holding member 270, and the pipette 200 move up and down as the belt portion 330 moves up and down.

The second movement part 251 is driven by the belt portion 331. That is, the pressing member 303 is mounted to the belt portion 331, and the pressing member 303 moves up and down as the belt portion 331 moves up and down. The second lifting member 300 and the container holding part 201 are movable up and down with the up-and-down movement of the pressing member 303.

The drive source 253 is a single motor, and is connected to the pulley 320. The drive source 253 is fixed to the second plate surface 260b on the left side in the left-right direction X of the plate-shaped member 260. The drive source 253 can switch between forward rotation and reverse rotation, and can rotate the belt 322 clockwise and counterclockwise through the pulley 320.

The movement mechanism 202 includes a vibration member 350 that vibrates the reaction container 70 held by the container holding part 201. The vibration member 350 is a vibration element that vibrates when being supplied with power, and is disposed on the arm portion 311 of the second lifting member 300.

The movement mechanism 202 includes a heating member 360 that heats the specimen or the reagent in the pipette 200. The heating member 360 is a heating element that generates heat when being supplied with power, and is disposed on the pipette holding member 270.

Hereinafter, the configurations of the specimen rack storage part 50, the specimen rack trays 65a, 65b, and the specimen rack 66 will be described with reference to FIG. 10 to FIG. 14.

FIG. 10 shows the specimen rack trays 65a, 65b to be set in the specimen rack storage part 50, and the specimen rack 66 to be placed on the specimen rack tray 65a, 65b. As shown in FIG. 10, the specimen rack tray 65a has an elongated base portion 509a having a rectangular shape in a plan view. The specimen rack tray 65a includes: a rear light-blocking wall 511a extending upward from a first end portion in the length direction of the base portion 509a; a front light-blocking wall 512a extending upward from a second end portion in the length direction of the base portion 509a; and a rack placement portion 5 10a. The specimen rack tray 65a is set in the specimen rack storage part 50 with the second end portion in the length direction of the base portion 509a facing forward in the front-rear direction Y.

The rack placement portion 510a is a recess formed in the base portion 509a, has a size that can house one specimen rack 66, and is formed between the rear light-blocking wall 511a and the front light-blocking wall 512a. The rack placement portion 510a stores therein the specimen rack 66 with the length direction of the specimen rack 66 being along the length direction of the specimen rack tray 65a. Each of the rear light-blocking wall 511a and the front light-blocking wall 512a has a substantially rectangular plate shape with the plate surfaces facing in the front-rear direction Y, and is perpendicular to the base portion 509a.

The specimen rack tray 65a further includes a pressing portion 513a formed on a front end of the base portion 509a, and a rail portion 514a protruding from the side surface of the base portion 509a. The pressing portion 513a is a portion that presses the lid 34 from the inside of the housing 10 when the specimen rack tray 65a is drawn out from the specimen rack storage part 50. The pressing portion 513a protrudes forward relative to the front light-blocking wall 512a. The rail portion 514a is a portion to be inserted in a slider portion 520a formed at the bottom of the specimen rack storage part 50 (see FIG. 11 described later). The rail portion 514a is formed straight along the length direction of the base portion 509a. Similarly to the specimen rack tray 65a, the specimen rack tray 65b includes a base portion 509b, a rack placement part 510b, a rear light-blocking wall 511b, a front light-blocking wall 512b, a pressing part 513b, and a rail portion 514b.

The specimen rack 66 is a rack capable of holding a plurality of specimen containers 67, and has a plurality of holding portions 66b in which the specimen containers 67 can be held in an upright state. The number of the holding portions 66b is not particularly limited. In the present embodiment, six holding portions 66b are aligned in the length direction of the specimen rack 66. The specimen rack 66 has a bottom portion 66a having a rectangular shape in a plan view, and wall portions 66c extending upward from the bottom portion 66a. The wall portions 66c are formed perpendicularly to the bottom portion 66a, and partition the plurality of holding portions 66b being storage spaces for the specimen containers 67. Each holding portion 66b has a size that can house one specimen container 67. In the specimen measurement apparatus 1, for example, one type of specimen rack 66 is used.

The specimen rack 66 is provided with specimen rack identification information 66d. The specimen rack identification information 66d is an indication including identification information that is readable by the information reading device 59a, and is a one-dimensional code or a two-dimensional code, for example. The identification information readable from the specimen rack identification information 66d is a specimen rack ID (identification) which is unique information capable of differentiating the specimen rack 66 from other racks. In the example shown in FIG. 10, a barcode being a one-dimensional code is provided on the wall portion 66c of the specimen rack 66. The specimen rack identification information 66d is provided by, for example, pasting a label on which a barcode is printed, to the wall portion 66c.

Each specimen container 67 is a cylindrical container having a bottom, in which a specimen such as blood collected from a subject is contained. The reagent container 67 is provided with specimen identification information 67d. The specimen identification information 67d is identification information readable by the information reading device 59a, and is a one-dimensional code or a two-dimensional code, for example. The identification information readable from the specimen identification information 67d is a specimen ID which is unique information capable of differentiating the specimen container 67 from other containers. In the example shown in FIG. 10, a barcode being a one-dimensional code is provided on the side surface of the specimen container 67. The specimen identification information 67d is provided by, for example, pasting a label on which a barcode is printed, to the side surface of the specimen container 67.

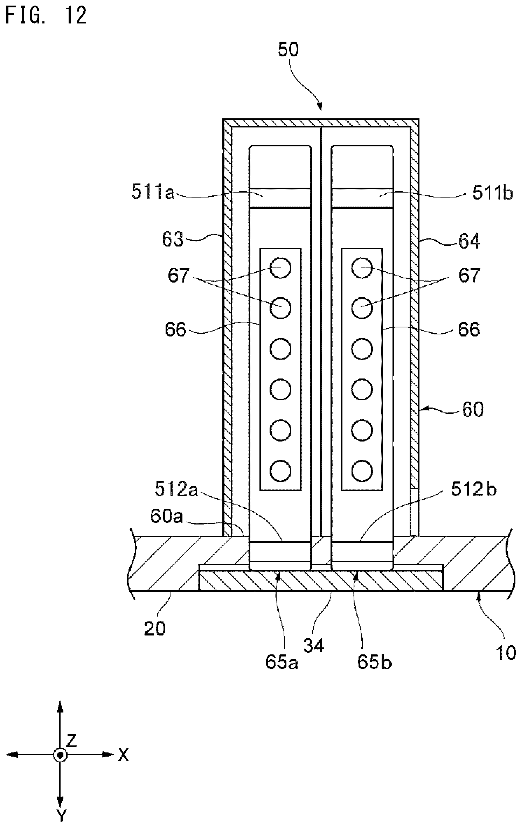

FIG. 11 and FIG. 12 each show a state in which the specimen rack trays 65a, 65b are stored in the specimen rack storage part 50. As shown in FIG. 11 and FIG. 12, the specimen rack storage part 50 is configured to be able to store therein the specimen rack trays 65a, 65b on which the specimen racks 66 are placed. The specimen rack storage part 50 includes a first storage space for the specimen rack tray 65a, and a second storage space for the specimen rack tray 65b that can be taken in and out with respect to the housing 10, independently from the specimen rack tray 65a.

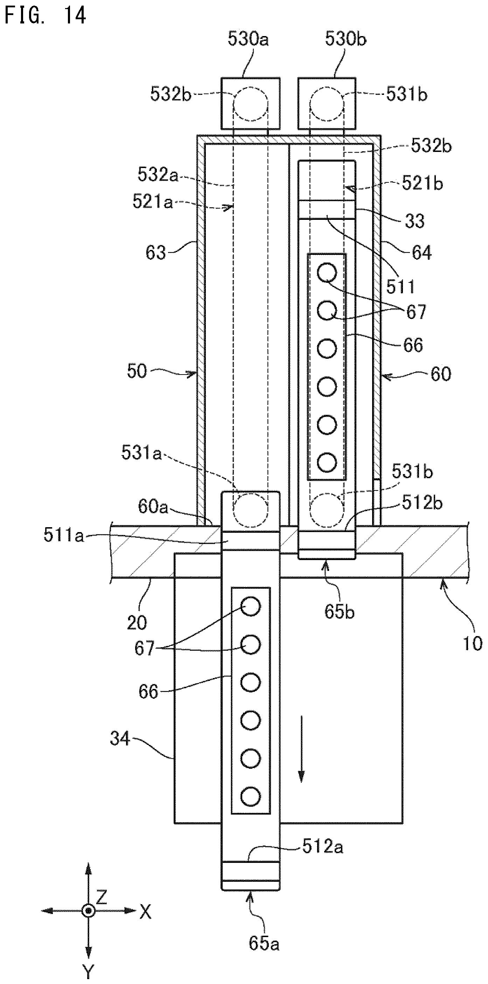

The specimen rack storage part 50 has the storage spaces for the two specimen rack trays 65a, 65b adjacent to each other in the left-right direction X of the specimen measurement apparatus 1, and can store therein a plurality of specimen racks 66. In the specimen rack storage part 50, the specimen rack trays 65a, 65b can be stored one by one, and the specimen rack storage part 50 is provided with electric actuators independent from each other. As shown in FIG. 14 described later, the specimen rack storage part 50 may be configured or controlled such that the specimen racks 66 stored in the storage spaces for the specimen rack trays 65a, 65b can be taken out one by one. In other words, the specimen rack storage part 50 may be configured or controlled such that the specimen rack trays 65a, 65b cannot be simultaneously taken out.

The specimen rack storage part 50 includes the cover member 60 that covers the entirety of the specimen rack trays 65a, 65b. The cover member 60 is a light blocking member surrounding the specimen rack trays 65a, 65b, but has openings 60a through which the specimen rack trays 65a, 65b can be taken in and out with respect to the specimen rack storage part 50. In addition, in the upper surface portion 61 of the cover member 60, the dispensing holes 62 (see FIG. 3) are formed, and each dispensing hole 62 allows dispensing of the specimen from the corresponding specimen container 67.

The specimen rack storage part 50 includes the slider portion 520a disposed on the bottom surface part 25 of the housing 10. The slider portion 520a has a groove in which the rail portion 514a of the specimen rack tray 65a is inserted, and extends long in the front-rear direction Y to support the specimen rack tray 65a in a movable state in the front-rear direction Y. The front surface part 20 of the housing 10 has the opening 33 that allows the specimen rack tray 65a to be taken in and out with respect to the specimen rack storage part 50, and the cover member 60 is disposed such that the opening 60a thereof overlaps the opening 33. The specimen rack tray 65a is stored in the specimen rack storage part 50 through the openings 33, 60a.

The cover member 60 has the left side surface part 63 and the right side surface part 64 that respectively cover the left side and the right side of the specimen rack trays 65a, 65b stored in the specimen rack storage part 50. The left side surface part 63 is in contact with the inner surface of the front surface part 20 of the housing 10 such that there is no space between itself and the inner surface of the front surface part 20. Meanwhile, the right side surface part 64 is disposed so as to have a predetermined space between itself and the inner surface of the front surface part 20. The information reading device 59a is disposed to the right of the specimen rack storage part 50, and the space between the right side surface part 64 and the front surface part 20 transmits light emitted from the information reading device 59a. The front light-blocking walls 512a, 512b of the specimen rack trays 65a, 65b are disposed so as to close the opening 33, and inhibit external light from entering through the opening 33 when the lid 34 is opened.

On the specimen rack tray 65a, 65b, the specimen rack 66 is placed with the specimen rack identification information 66d facing the right side of the specimen measurement apparatus 1, i.e., facing the information reading device 59a. In addition, in the specimen rack 66, a specimen container 67 is held in each holding portion 66b with the specimen identification information 67d facing the right side of the specimen measurement apparatus 1. The wall portion 66c of the specimen rack 66 is formed so as not to cover the side surface of the specimen container 67 facing the right side of the specimen measurement apparatus 1. Thus, the specimen identification information 67d of the specimen container 67 stored in the holding portion 66b can be read.

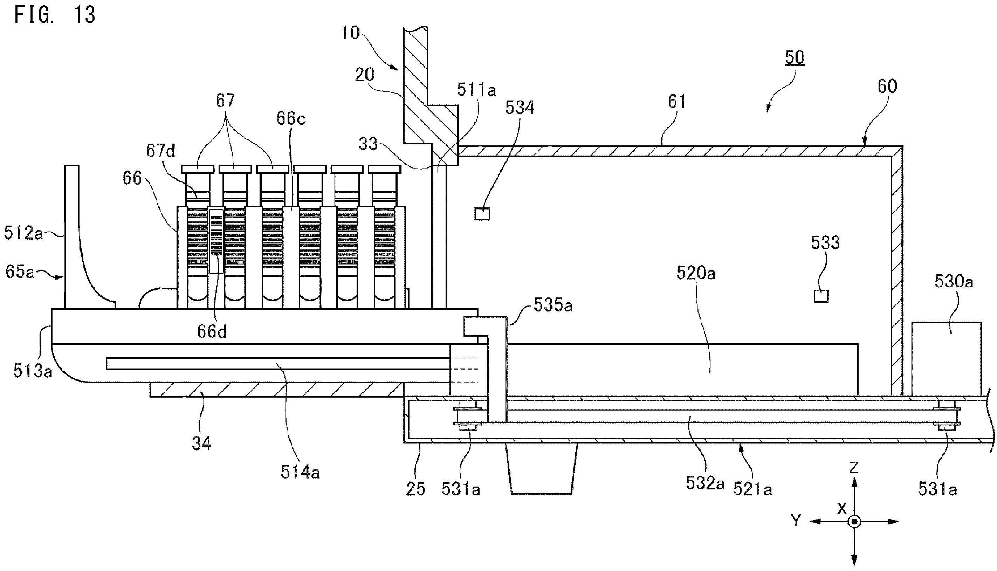

FIG. 13 and FIG. 14 show a state in which the specimen rack tray 65a is drawn out from the specimen rack storage part 50. As shown in FIG. 13 and FIG. 14, the specimen rack storage part 50 is configured to be able to move the specimen rack tray 65a along the front-rear direction Y, and take in and out the specimen rack tray 65a through the opening 33 of the housing 10. The specimen rack storage part 50 includes an electric actuator 521a for moving the specimen rack tray 65a. The actuator 521a includes a motor 530a, two pulleys 531a, and a belt 532a wound around the two pulleys 531a. The motor 530a is, for example, a stepping motor, a servo motor, or the like.

The actuator 521a has a configuration in which, under the slider portion 520a, the two pulleys 531a are disposed spaced apart from each other in the front-rear direction Y, and the belt 532a is disposed along the front-rear direction Y. The belt 532a is connected to the specimen rack tray 65a via a predetermined metal fitting 535a. The motor 530a is disposed on the rear side of the specimen rack storage part 50, and drives the rear-side pulley 531a. Drive of the rear-side pulley 531a causes the belt 532a to move, and the specimen rack tray 65a connected to the belt 532a moves in the front-rear direction Y along the slider portion 520a.

When the specimen rack tray 65a is drawn out from the specimen rack storage part 50, as described above, the pressing portion 513a of the specimen rack tray 65a presses the lid 34 from the inside of the housing 10, whereby the lid 34 is opened. The actuator 521a moves the specimen rack tray 65a up to a position at which the rack placement portion 510a of the specimen rack tray 65a is completely drawn out from the housing 10 and the rear light-blocking wall 511a closes the opening 33. The rear light-blocking wall 511a closing the opening 33 inhibits external light from entering the housing 10 through the opening 33.

The specimen rack storage part 50 further includes an electric actuator 521b, and is configured to be able to take in and out the specimen rack tray 65b independently from the specimen rack tray 65a. Similarly to the actuator 521a, the actuator 521b includes a motor 530b, pulleys 531b, and a belt 532b.

The actuator 521a is actuated on the basis of operation information of the monitor 40 being a touch panel. As specifically described later, when the specimen rack tray 65a is stored in the specimen rack storage part 50, the motor 530a is actuated on the basis of an operation performed on a rack discharge button, the lid 34 is opened while being pressed by the pressing portion 513a of the specimen rack tray 65a, and the specimen rack tray 65a is drawn out from the specimen rack storage part 50. When a measurement start button is operated in the state where the specimen rack tray 65a is drawn out, the motor 530a is actuated, and the specimen rack tray 65a moves into the specimen rack storage part 50.

The specimen rack storage part 50 includes an origin sensor 533 that detects presence of the specimen rack tray 65a or the specimen rack 66. The origin sensor 533 is a sensor that detects completion of loading of the specimen rack 66, i.e., detects that the specimen rack 66 has moved to an appropriate position, in the specimen rack storage part 50, at which suction of the specimen can be started. In the present embodiment, when the origin sensor 533 detects the specimen rack tray 65a, completion of loading of the specimen rack 66 is detected. In the case of the specimen rack tray 65b as well, the motor 530b is controlled on the basis of the operation information of the monitor 40, and completion of loading of the specimen rack 66 is detected by the origin sensor 533.

In the cover member 60, the origin sensor 533 is disposed on the rear side of the specimen rack storage part 50. When the specimen rack tray 65a is stored in the specimen rack storage part 50, the motor 530 is stopped upon detection of the specimen rack tray 65a by the origin sensor 533. The origin sensor 533 is, for example, a reflection type photosensor, and each of the specimen rack trays 65a, 65b is provided with one origin sensor 533.

The specimen rack storage part 50 includes a sensor 534 that detects a specimen container 67 held by the specimen rack 66. The sensor 534 is a sensor for confirming presence/absence of a specimen (specimen container 67), and a photosensor similar to the origin sensor 533 may be used as the sensor 534. Each of the specimen rack trays 65a, 65b may be provided with one sensor 534. Information on detection of a specimen container 67 by the sensor 534 is used as a trigger for the information reading device 59a to start imaging. At a holding portion 66b where the specimen container 67 is detected by the sensor 534, the information reading device 59a reads the specimen identification information 67d of the specimen container 67.

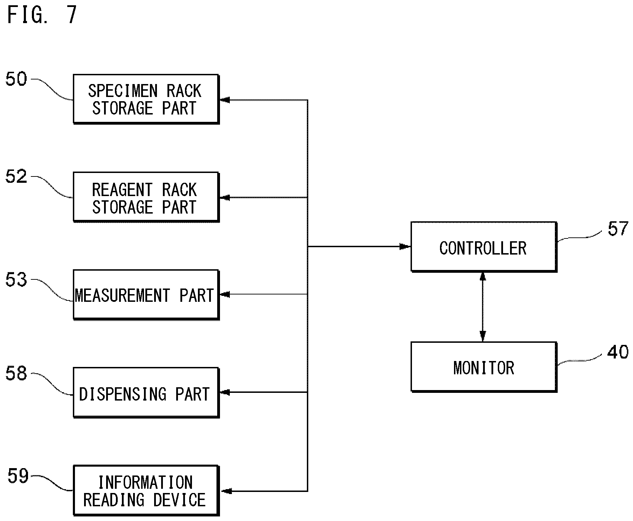

FIG. 7 is a block diagram regarding control of the specimen measurement apparatus 1. As shown in FIG. 7, the controller 57 is communicable with various devices such as the specimen rack storage part 50, the reagent rack storage part 52, the measurement part 53, the dispensing part 58, and the information reading device 59, and controls operations of the various devices. In the present embodiment, two information reading devices 59a, 59b are provided as examples of the information reading device 59 (see FIG. 2). The controller 57 includes a CPU and a memory. By the CPU executing a program stored in the memory, the controller 57 controls the various devices to execute specimen measurement.

The controller 57 is connected to the monitor 40 as a display. For example, the controller 57 executes specimen measurement on the basis of information inputted through the monitor 40, and displays the result of the specimen measurement on the monitor 40. In addition, the controller 57 is connected to a host computer via a communication network. The specimen measurement apparatus 1 is installed in a laboratory of a hospital. In this case, an example of the host computer is a system that is connected to a plurality of examination instruments and manages information on specimens in a centralized manner.

In the specimen measurement apparatus 1, a measurement mode is set for each specimen rack. The controller 57 executes a process regarding specimen measurement, according to a normal mode or an urgent mode that is higher in urgency in measurement than the normal mode, which are set as specimen measurement modes for each specimen rack. As specifically described later, in the case where a first specimen rack in the normal mode and a second specimen rack in the urgent mode are stored in the specimen rack storage part 50, the controller 57 preferentially performs measurement of a specimen held in the second specimen rack.

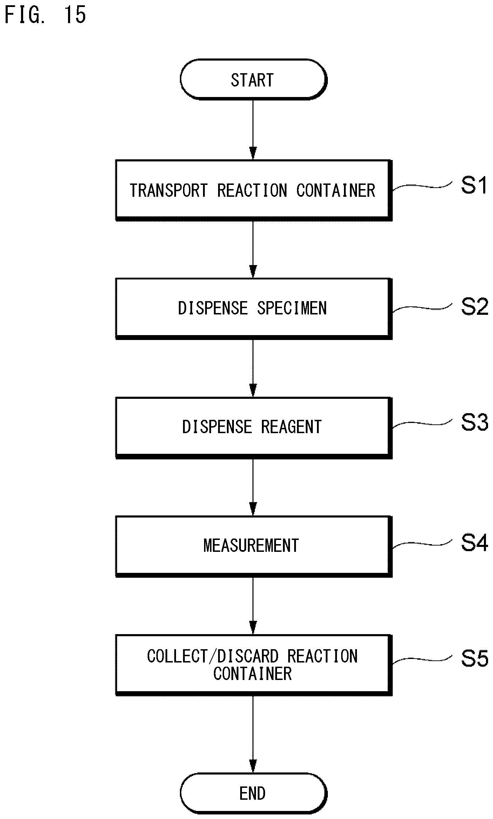

An example of the specimen measurement by the specimen measurement apparatus 1 will be described with reference to FIG. 15. FIG. 15 is a flowchart showing a specimen measurement process.

In the specimen measurement of the specimen measurement apparatus 1, mainly, a reaction container transport step S1, a specimen dispensing step S2, a reagent dispensing step S3, a measurement step S4, and a reaction container collection/disposal step S5 are performed in this order. These steps are executed under control of the controller 57.

Before start of the specimen measurement, a plurality of empty reaction containers 70 are stored in the reaction container storage part 51. A specimen rack 66 that holds a plurality of specimen containers 67 each containing a specimen is placed on the specimen rack tray 65a or the specimen rack tray 65b, and stored in the specimen rack storage part 50. In addition, a reagent rack that holds reagent containers each containing a reagent is placed on the reagent rack tray 85, and stored in the reagent rack storage part 52.

In the specimen measurement, the transport step S1 for a reaction container 70 is performed. In the reaction container transport step S1, first, the container holding part 201 of the dispenser 190 moves from an initial position to a position above the container rack 71 of the reaction container storage part 51, and thereafter moves down and holds an empty reaction container 70 in the container rack 71.

Next, the container holding part 201 moves to a position above the heating part 90, and thereafter moves down, whereby the reaction container 70 is held in a holding hole 120 of the heating part 90. Then, the container holding part 201 moves up.

Subsequently, the specimen dispensing step S2 is performed. First, the pipette 200 of the dispenser 190 moves to a position above the specimen rack storage part 50, and then moves down. The pipette 200 passes through a dispensing hole 62 in the upper surface portion 61 of the cover member 60, is inserted in a specimen container 67 in the specimen rack 66 placed on the specimen rack tray 65a or the specimen rack tray 65b, and suctions the specimen. The dispensing holes 62 are formed corresponding to all the holding portions 66b of the specimen rack 66, so that the pipette 200 can suction specimens from all the specimen containers 67 held by the specimen rack 66. As specifically described later, in the specimen dispensing step S2, it is determined from which of the specimen rack trays 65a, 65b specimen dispensing should be started, according to measurement priority that is determined on the basis of a first priority criterion regarding the measurement mode and a second priority criterion regarding a condition other than the measurement mode.

Thereafter, the pipette 200 moves up from the specimen rack storage part 50, and moves to a position above the heating part 90. The pipette 200 moves down toward the reaction container 70 in the heating part 90, and injects the specimen into the reaction container 70.

Next, the pipette 200 moves up from the heating part 90, and moves to a position on the washing part 54. The pipette 200 moves down toward the washing chamber 160 of the washing part 54, is inserted into the washing chamber 160, and is washed. Finally, the pipette 200 moves up from the washing part 54.

Next, the reagent dispensing step S3 is performed. First, the pipette 200 moves to a position above the reagent rack storage part 52, and moves down. The pipette 200 passes through a dispensing hole 82 in the upper surface portion 81 of the cover member 80, is inserted in a reagent container in the reagent rack held on the reagent rack tray 85, and suctions the reagent.

Next, the pipette 200 moves up from the reagent rack storage part 52. Next, the reagent in the pipette 200 is heated by the heating member 360. The pipette 200 moves to a position above the heating part 90 while the reagent in the pipette 200 is being heated.

Next, the container holding part 201 of the dispenser 190 moves down toward the reaction container 70 in the heating part 90, and holds the reaction container 70 in the heating part 90.

Next, the container holding part 201 moves up from the heating part 90, and the pipette 200 moves down and is inserted in the reaction container 70. Then, the pipette 200 injects the reagent into the reaction container 70 in the container holding part 201. Next, the reaction container 70 in the container holding part 201 is vibrated by the vibration member 350, and the specimen to which the reagent is added is agitated, whereby a measurement sample is prepared.

Next, the container holding part 201 moves to a position above the detection part 91, and then moves down. The container holding part 201 moves down toward a holding hole 130 of the detection part 91, and sets the reaction container 70 in the holding hole 130. Finally, the container holding part 201 moves up from the detection part 91.

Next, the measurement step S4 is performed. Specimen measurement performed in the measurement step S4 is affected by external light. In the detection part 91, blood coagulation measurement for analyzing activity of a coagulation factor of the specimen contained in the reaction container 70 is performed. This measurement is performed as follows. As shown in FIG. 6, light from the light source 140 is applied to the measurement sample in the reaction container 70, the detector 141 detects light transmitted through the measurement sample, and optical information of the measurement sample is measured.

The optical information is time series data of the light detected by the detector 141. That is, the optical information is time series data that is continuously detected for a predetermined time, and the time during which the time series data is detected is about 30 seconds to 5 minutes. The time series data may be a plurality of pieces of time series data that are obtained by detecting a plurality of wavelengths of light having passed through the measurement sample. For example, the time series data may be data for calculating a coagulation time of the specimen, or concentration and/or activity of a component included in the specimen. The coagulation time of the specimen may be calculated from the time series data by using a percentage detection method. Alternatively, a synthetic substrate method or an immunonephelometry method may be used for calculating the concentration and/or activity of a component included in the specimen, from the time series data.

Finally, the reaction container collection/disposal step S5 is performed. First, the container holding part 201 of the dispenser 190 moves to a position above the detection part 91, and then moves down. Next, the container holding part 201 holds the reaction container 70 in the detection part 91.

Next, the container holding part 201 moves up from the detection part 91, and moves to a position above the disposal part 55. The container holding part 201 moves down toward the disposal port 170 of the disposal part 55, and discards the reaction container 70 into the disposal port 170. Finally, the container holding part 201 moves up from the disposal part 55, and thereafter is returned to the initial position.

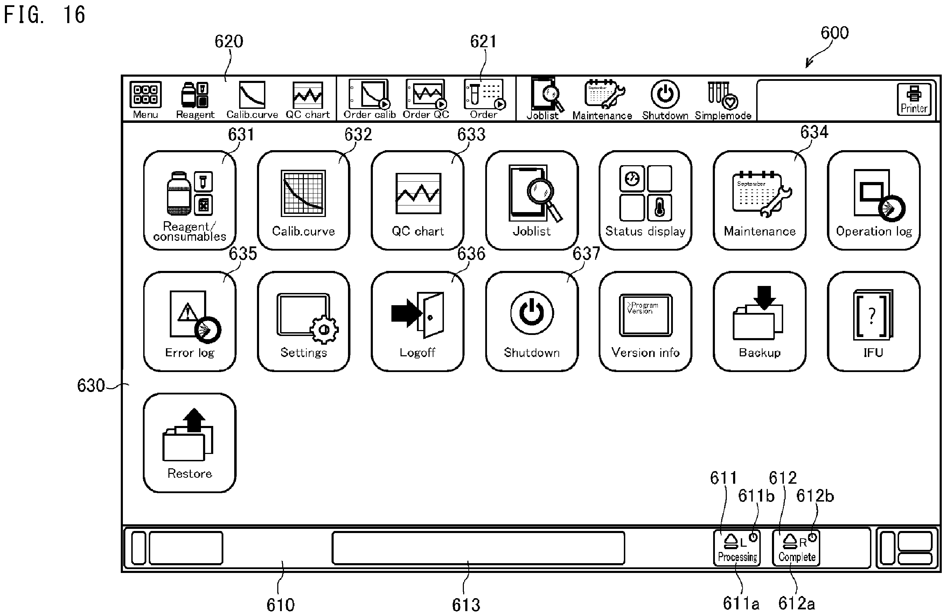

Hereinafter, the specimen measurement modes, particularly, the urgent mode, will be described with reference to FIG. 16 to FIG. 23. In addition, the main menu window 600 including rack discharge buttons 611, 612, and the order window 700 including an urgent mode selection button 702 will be described in detail.

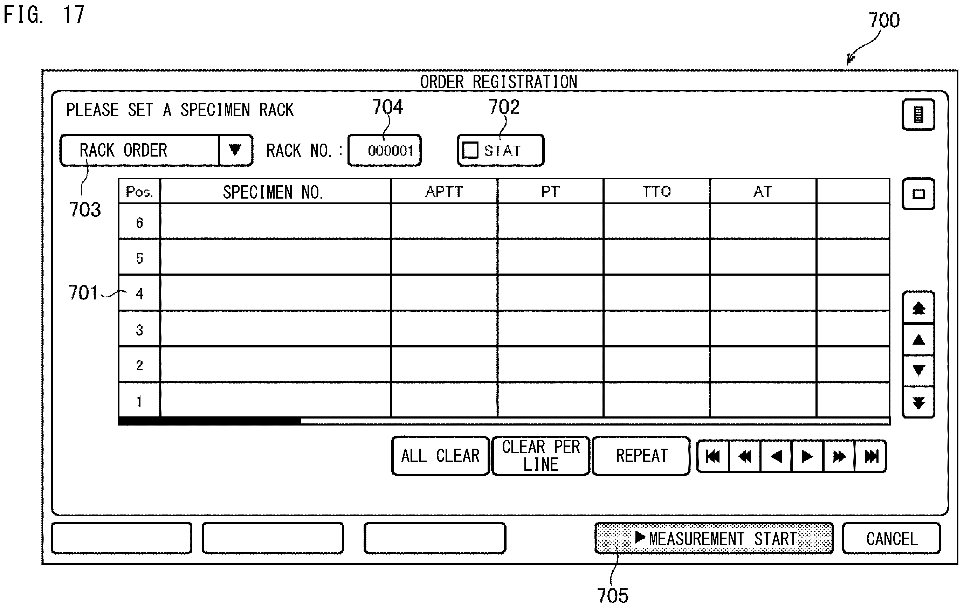

FIG. 16 shows the main menu window 600. FIG. 17 shows the order window 700 for selecting a specimen measurement mode, and starting measurement. The main menu window 600 and the order window 700 are displayed on the monitor 40. As shown in FIG. 16, the rack discharge buttons 611, 612 are displayed on the main menu window 600. When the rack discharge button 611 is operated, the left-side specimen rack tray 65a is drawn out from the housing 10, the specimen rack 66 placed on the specimen rack tray 65a is taken out from the specimen rack storage part 50, and the monitor 40 displays the order window 700 shown in FIG. 17. When the rack discharge button 612 is operated, the right-side specimen rack tray 65b is drawn out from the housing 10, the specimen rack 66 placed on the specimen rack tray 65b is taken out from the specimen rack storage part 50, and the monitor 40 displays the order window 700 shown in FIG. 17.

In the present embodiment, the specimen rack 66 is stored in the specimen rack storage part 50 while placed on the specimen rack tray 65a, 65b, and the specimen rack tray 65a, 65b is drawn out from the housing 10 when the actuator of the specimen rack storage part 50 is actuated through an operation performed on the rack discharge button 611, 612. With the order window 700, the operator can select a specimen measurement mode for each rack, and can load the specimen rack tray 65a, 65b on which the specimen rack 66 is placed into the specimen rack storage part 50 by operating a measurement start button 705 on the order window 700. When the measurement start button 705 is operated, the actuator of the specimen rack storage part 50 is actuated, and the specimen rack tray 65a, 65b is drawn into the housing 10.

In the specimen measurement apparatus 1, a measurement mode is set for each specimen rack, as described above. The measurement modes include the normal mode, and the urgent mode higher in urgency in measurement than the normal mode. The function of the controller 57 allows a specimen measurement mode to be set for each specimen rack, and allows the specimen held in the specimen rack 66 in the urgent mode to be measured in preference to the specimen held in the specimen rack 66 in the normal mode. Since the urgent mode is set for each specimen rack, for example, preparation of a barcode for an urgent specimen, manual input of necessary information, etc., become unnecessary, whereby interruption measurement of an urgent specimen can be easily and quickly performed.

As shown in FIG. 16, on the main menu window 600, a first tool bar 610 including the rack discharge buttons 611, 612, a second tool bar 620, and a menu icon display area 630 are displayed. In the example shown in FIG. 16, the first tool bar 610 is displayed on a lower end portion of the main menu window 600, and the second tool bar 620 is displayed on an upper end portion of the main menu window 600. However, for example, the positions of the respective tool bars may be inverted, or may be discretionarily changed. The main menu window 600 is a window that is initially displayed when the specimen measurement apparatus 1 is activated, for example.

In the menu icon display area 630, a plurality of icons for performing various operations and information display are displayed. Examples of the icons displayed in the menu icon display area 630 include a reagent/consumables icon 631, a calibration curve icon 632, a QC chart icon 633, a maintenance icon 634, an error log icon 635, a logoff icon 636, and a shutdown icon 637. For example, the operator can confirm the usage status of reagents or consumables loaded into the specimen measurement apparatus 1 by operating the reagent/consumables icon 631.

The first tool bar 610 is a band-like area including the rack discharge buttons 611, 612, and is displayed on a lower portion of the main menu window 600. The tool bar 610 further includes an information display part 613 for displaying information such as an error message. The tool bar 610 may include various indicators indicating pieces of information such as the state of the apparatus, the state of the host computer, the remaining amount of reagents, consumables, etc., and the like

The tool bar 610 is preferably displayed on a plurality of windows including the main menu window 600. That is, the rack discharge buttons 611, 612 are displayed on at least one window selected from among a plurality of windows, and preferably, displayed on a plurality of windows including the main menu window 600. In this case, when the specimen rack 66 is taken out from the specimen rack storage part 50, the operator can operate the rack discharge buttons 611, 612 also on the window other than the main menu window 600, thereby improving the usability. The rack discharge buttons 611, 612 may be displayed on an area other than the tool bar 610, and may be displayed on the menu icon display area 630 or the like.

The rack discharge buttons 611, 612 are respectively provided with indicators 611a, 612a each indicating the state of the specimen rack 66 stored in the specimen rack storage part 50, and the state of the specimen held in the specimen rack 66. When no specimen rack 66 is stored in the specimen rack tray 65a or a specimen rack 66 having no specimen container 67 is stored in the specimen rack tray 65a, the indicator 611a displays a word "None" indicating an empty state (the same applies to the indicator 612a). When the specimen is suctioned from the specimen container 67 held by the specimen rack 66 and measurement is started, the indicator 611a displays a word "Processing" indicating that measurement is in progress.

When the specimens are suctioned from all the specimen containers 67 held by the specimen rack 66, or when it is determined that a retest is not to be performed, the indicator 611a displays a word "Completed" indicating that suction is completed. According to the states of the specimen rack 66 and the specimens, the color, lighting state, etc., of each rack discharge button may be changed. The color of the rack discharge button 611, 612 may be changed to "white" in the empty state, "green" during measurement, and "blue" after completion of suction, for example.

In the example shown in FIG. 16, circular marks 611b, 612b are further displayed on the upper right portions of the rack discharge buttons 611, 612, respectively. The marks 611b, 612b each function as an indicator indicating the state of the specimen rack 66, and the state of the specimen held in the specimen rack 66. At least one of the color and the lighting state of the marks 611b, 612b may be changed, or the marks 611b, 612b may be made invisible, according to the states of the specimen rack 66 and the specimen. The shape, layout, etc., of the marks 611b, 612b are not particularly limited.

Table 1 shows an example of display modes of the marks 611b, 612b.

**[Table 1]**

| Mark | States of rack/specimen |
|---|---|
| Invisible | Empty |
| Blue light | Order registered |
| Green light | During measurement |
| Blinking | Suction completed or measurement completed |

For example, the marks 611b, 612b are lit in blue from when the specimen rack trays 65a, 65b are drawn out to when suction of the specimen is started through operations on the rack discharge buttons 611, 612, and are lit in green from when suction of the specimen is started to when measurement of all the specimens in the specimen rack 66 is completed, or to when suction of all the specimens is completed. When measurement or suction of all the specimens in the specimen rack 66 is completed, the marks 611b, 612b are blinked.

The rack discharge buttons 611, 612 may have only either the indicators 611a, 612a or the marks 611b, 612b. In the case where the marks 611b, 612b are displayed on the rack discharge buttons 611, 612, words (e.g., "rack open/close") indicating that the rack discharge buttons 611, 612 are buttons for discharging the specimen rack 66 may be displayed on the rack discharge buttons 611, 612.

The second tool bar 620 is a band-like area including a third rack discharge button 621. In the present embodiment, the specimen rack 66 is drawn out from the specimen rack storage part 50 and the order window 700 is displayed on the monitor 40 through operations performed on the rack discharge buttons 611, 612 on the first tool bar 610, but the order window 700 can also be opened through an operation performed on the third rack discharge button 621. However, when the third rack discharge button 621 is operated, the controller 57 determines the specimen rack tray 65a or 65b to be moved to the take-out position on the basis of the measurement state of the specimens set on the specimen rack trays 65a, 65b.

The tool bar 620 may include some of the icons displayed on the menu icon display area 630. Moreover, similarly to the tool bar 610, the tool bar 620 may be displayed on a plurality of windows including the main menu window 600.

As shown in FIG. 17, on the order window 700, a measurement start button 705, and an order registration part 701 for registering specimen information such as specimen IDs and measurement items, are displayed. In the example shown in FIG. 17, the order registration part 701 is displayed in the center of the order window 700, and the measurement start button 705 is displayed on the lower right of the window. The measurement start button 705 is a button for starting specimen measurement. Through an operation on this button, the specimen rack 66 placed on the specimen rack tray 65a, 65b is drawn into the specimen rack storage part 50, and the specimen identification information 67d of each specimen container 67 is read by the information reading device 59a. The order window 700 is displayed on the monitor 40 until loading of the specimen rack 66 is completed, for example.

The order registration part 701 is displayed in a table form that allows the operator to input information on each specimen. In the case where the host computer has, registered therein, information regarding each specimen, such as measurement items, in association with a specimen ID, the operator need not input such information on the order registration part 701, and only needs to operate the measurement start button 705 after placing the specimen rack 66 on the specimen rack tray 65a, 65b. In this case, as described above, the information reading device 59a reads the specimen identification information 67d on each specimen container 67 held by the specimen rack 66, and inquires the host computer of information required for specimen measurement such as measurement items.

The order window 700 functions as an input window that allows selection of a measurement mode of specimens for each specimen rack. In the present embodiment, when the urgent mode is selected by the order window 700, the controller 57 preferentially performs, in the urgent mode, measurement of the specimens held in the corresponding specimen rack 66. On the other hand, when the urgent mode is not selected, the controller 57 performs, in the normal mode, measurement of the specimens held in corresponding specimen rack 66. That is, when the specimens are measured in the normal mode, an operation for selecting the normal mode is not required.

The order window 700 includes a measurement mode selection button for selecting a measurement mode for each specimen rack. In the present embodiment, the urgent mode selection button 702 is provided as the measurement mode selection button. The urgent mode selection button 702 is a button for selecting, for each specimen rack, whether or not the urgent mode is applicable. The urgent mode selection button 702 provided on the order window 700 allows the operator to easily select the measurement mode. When the urgent mode is selected by operating the urgent mode selection button 702, the controller 57 preferentially performs, in the urgent mode, measurement of the specimens held in the corresponding specimen rack 66.

The urgent mode selection button 702 has a check box. In addition, a word "STAT" meaning "immediately" are displayed on the urgent mode selection button 702. When the operator puts a check mark in the check box on the urgent mode selection button 702, the measurement mode of the specimen for which an order is registered on the order window 700 is set to the urgent mode for each rack. That is, through the operation on the urgent mode selection button 702, the measurement mode of all the specimens held in the corresponding specimen rack 66 is set to the urgent mode.

The urgent mode selection button 702 is disposed on the upper side of the window relative to the order registration part 701, but the layout of the button is not particularly limited. The urgent mode selection button 702 may be a pulldown button. The type of the button is not particularly limited. Although the order window 700 may be provided with a button for selecting whether or not the normal mode is applicable, such a button is not provided in the present embodiment. Therefore, if the urgent mode is not selected by operating the urgent mode selection button 702, the controller 57 performs, in the normal mode, measurement of the specimens held in the corresponding specimen rack 66.

The order window 700 further includes a measurement mode display part 703 and a rack identification information display part 704. The measurement mode display part 703 displays, for example, the measurement mode currently selected. The measurement mode display part 703 may be provided with a pulldown button. This button may function as a measurement mode selection button, and selection of a measurement mode may be performed by operating this button. On the rack identification information display part 704, an identification number or a management number of the specimen rack 66 is displayed.

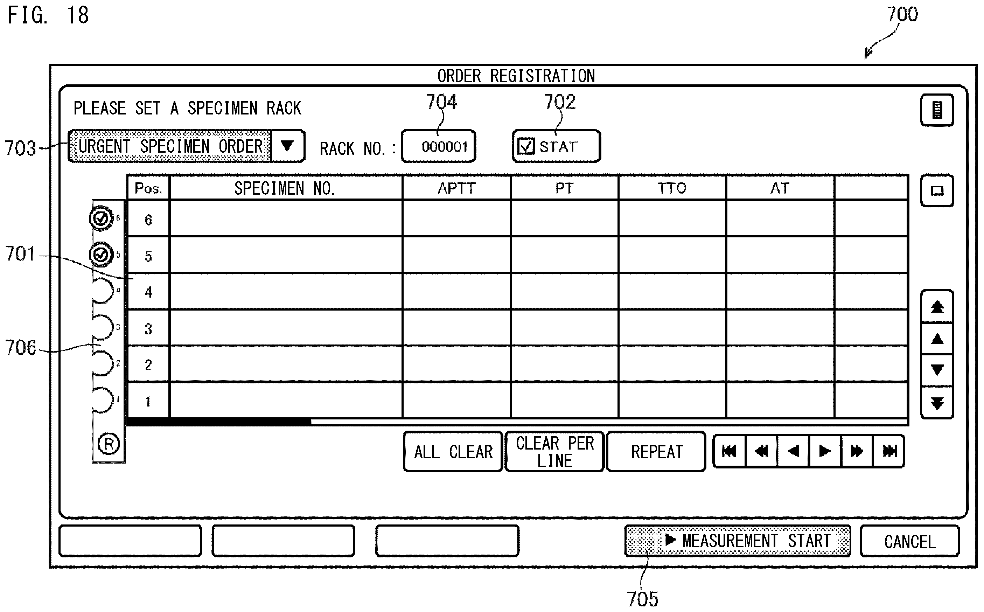

FIG. 18 shows the order window 700 in a case where the urgent mode is selected, and the specimen rack 66 in the urgent mode is drawn into the specimen rack storage part 50. In the example shown in FIG. 18, a check mark is put in the check box of the urgent mode selection button 702, and words "urgent specimen order" indicating that the urgent mode is currently selected are displayed on the measurement mode display part 703. When the urgent mode is not selected, for example, words "normal specimen order" indicating that the measurement mode is the normal mode may be displayed on the measurement mode display part 703.

The order window 700 further includes a reading result display part 706 on which the status and the result of reading of the specimen identification information 67a by the information reading device 59a are displayed. On the reading result display part 706, a rack image in which a position number is added to each of the holding portions 66b of the specimen rack 66 is displayed, and the reading state and result of the specimen identification information 67a are displayed for each holding portion 66b. In the example shown in FIG. 18, specimen containers 67 are set in holding portions 66b of No. 5 and No. 6, and icons indicating that the specimen identification information 67a has been normally read are displayed on the rack images of No. 5 and No. 6.

As described above, the order window 700 displays a rack image indicating the status and the result of reading of the specimen identification information 67a for each specimen holding position in the specimen rack 66. In the example shown in FIG. 18, the reading result display part 706 including the rack images is displayed to the left of the order registration part 701, but the status and the result of reading of the specimen identification information 67a may be displayed in the table of the order registration part 701. The reading result display part 706 is displayed at the timing when the measurement start button 705 is operated, for example. At a position where reading of the specimen identification information 67a by the information reading device 59a is currently executed or to be executed next, an icon indicating this state may be displayed.

On the reading result display part 706, if the specimen identification information 67a cannot be read, an icon indicating a reading error is displayed at a corresponding position on the rack image. For example, in the case where the specimen container 67 is set in the specimen rack 66 with the specimen identification information 67a facing the opposite direction from the information reading device 59a, the specimen identification information 67a cannot be read, and an icon indicating a reading error is displayed. In this case, the operator can draw out the specimen rack 66 from the specimen rack storage part 50, and correctly set the specimen container 67. For a holding portion 66b where a specimen container 67 is absent, an icon regarding whether or not reading is successful is not displayed.

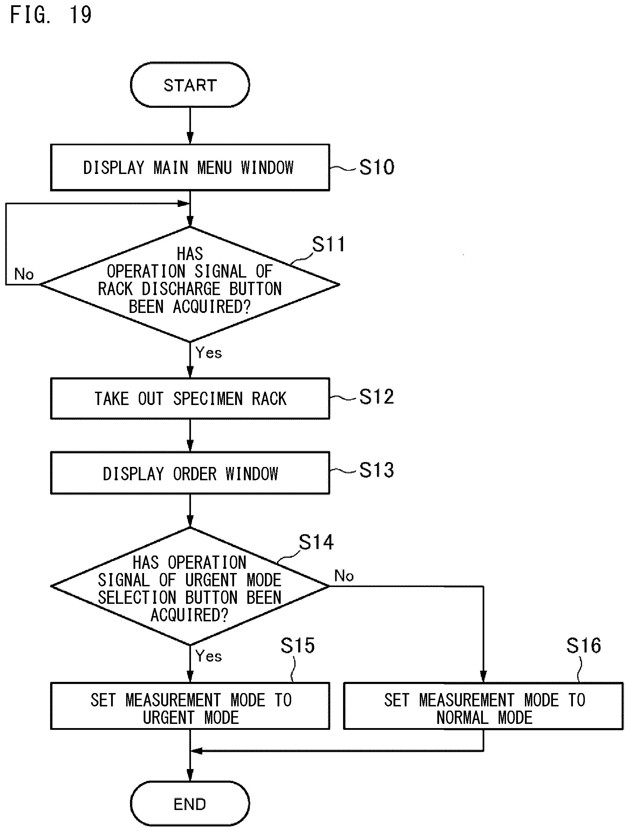

FIG. 19 is a flowchart showing a procedure of take-out, placement, and measurement mode setting, for a specimen rack 66. FIG. 19 shows a procedure from when a specimen rack 66 during measurement in the normal mode is present on the left-side specimen rack tray 65a in the specimen rack storage part 50 and the main menu window 600 is displayed on the monitor 40, to when a measurement mode is set for a specimen rack 66 placed on the right-side specimen rack tray 65b. It is assumed that an already measured specimen rack 66 is placed on the right-side specimen rack tray 65b.

As shown in FIG. 19, in step S10, the main menu window 600 is displayed on the monitor 40. The main menu window 600 includes the rack discharge button 612 for drawing out the specimen rack 66 from the right-side specimen rack tray 65b. Upon acquiring an operation signal of the rack discharge button 612 (Yes in step S11), the controller 57 draws out the specimen rack 66 from the specimen rack tray 65b (step S12), and causes the monitor 40 to display the order window 700 (step S13). When an operation of the rack discharge button 612 is not acquired (No in step S11), the process does not proceed to steps S12, S13.

In step S12, the controller 57 controls the actuator of the specimen rack storage part 50 to move the specimen rack tray 65b, on which the specimen rack 66 is placed, frontward of the apparatus. In step S13, the controller 57 switches the screen of the monitor 40 from the main menu window 600 to the order window 700, or causes the order window 700 to be displayed on the main menu window 600. Steps S12, S13 may be simultaneously executed, or the specimen rack 66 may be taken out after the order window 700 is displayed on the monitor 40. When performing additional measurement of a specimen, the operator places the specimen rack 66 in which the corresponding specimen container 67 is held, on the drawn out specimen rack tray 65b.

Upon acquiring an operation signal of the urgent mode selection button 702 (Yes in step S14), the controller 57 sets the measurement mode of the specimen rack 66 placed on the specimen rack tray 65b to the urgent mode (step S15). Since the specimen measurement mode is set for each specimen rack as described above, the measurement mode of all the specimens held in the specimen rack 66 is set to the urgent mode. On the other hand, when an operation signal of the urgent mode selection button 702 is not acquired in step S14 (No in step S14), the controller 57 sets the measurement mode of the specimen rack 66 to the normal mode (step S16).

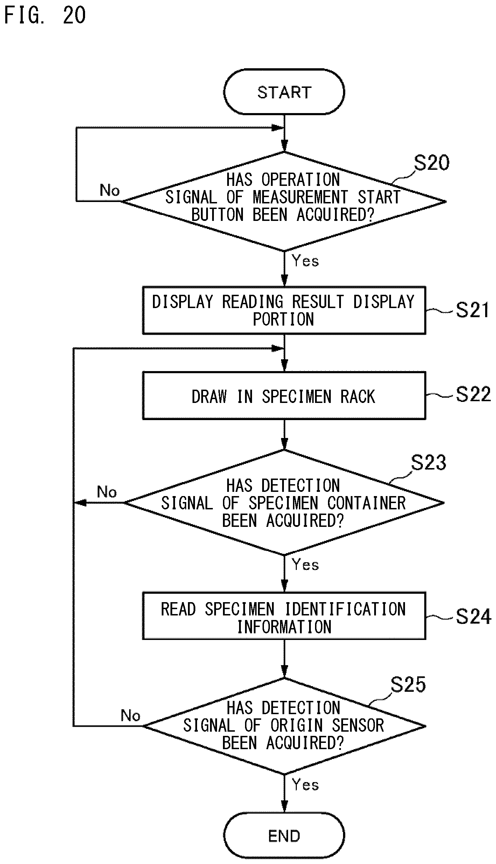

FIG. 20 is a flowchart showing a procedure of loading of the specimen rack tray 65b into the specimen rack storage part 50. As shown in FIG. 20, upon acquiring an operation signal of the measurement start button 705 (Yes in step S20), the controller 57 causes the order window 700 to display the reading result display part 706 (step S21), and draws the specimen rack tray 65b into the specimen rack storage part 50 (step S22). When an operation signal of the measurement start button 705 is not acquired (No in step S20), the process does not proceed to steps S21, S22.

In step S21, the controller 57 controls the actuator of the specimen rack storage part 50 to move the specimen rack tray 65b on which the specimen rack 66 is placed, into the specimen rack storage part. The actuator moves the specimen rack tray 65b into the specimen rack storage part while temporarily stopping the specimen rack tray 65b at a position where the specimen identification information 67a is read by the information reading device 59a. In step S22, the controller 57 causes the order window 700 to display the rack image in which the position number is added to each holding portion 66b of the specimen rack 66. Steps S21, S22 may be simultaneously performed, or the order window 700 may be caused to display the reading result display part 706 after draw-in of the specimen rack 66 is started.

Upon acquiring a detection signal of the specimen container 67 from the sensor 534 disposed in the specimen rack storage part 50 (Yes in step S23), the controller 57 causes the information reading device 59a to read the specimen identification information 67a (step S24). The controller 57 repeats steps S22 to S24 until the detection signal of the specimen rack tray 65b is acquired by the origin sensor 533 disposed in the specimen rack storage part 50. When the detection signal is acquired by the origin sensor 533 (Yes in step S25), the specimen rack tray 65b is in the state of being drawn deep into the specimen rack storage part 50, whereby the process of loading the specimen rack 66 is ended. The controller 57 moves the specimen rack tray 65b by controlling the motor 530b of the actuator 521b. Also, in the case of moving the specimen rack tray 65a, the controller 57 controls the motor 530a of the actuator 521a.

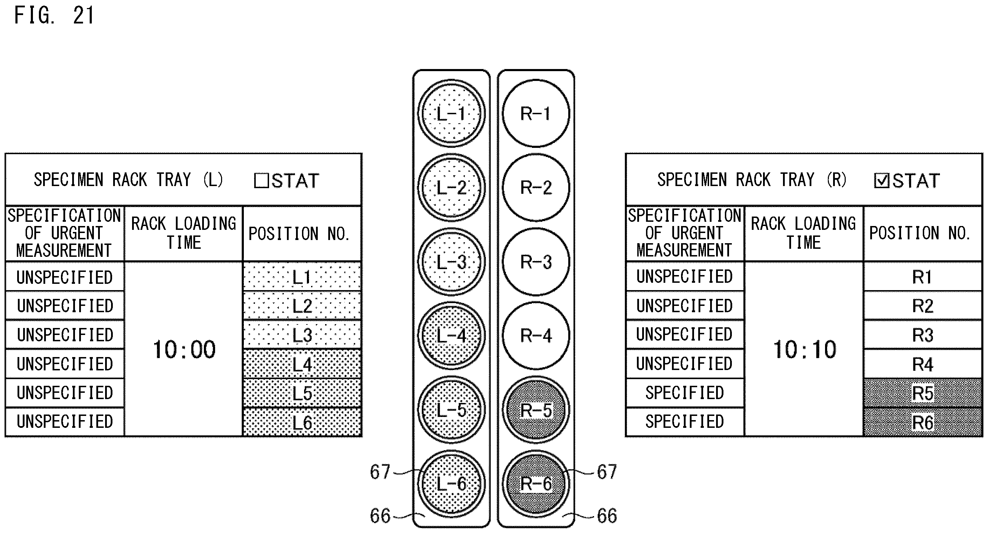

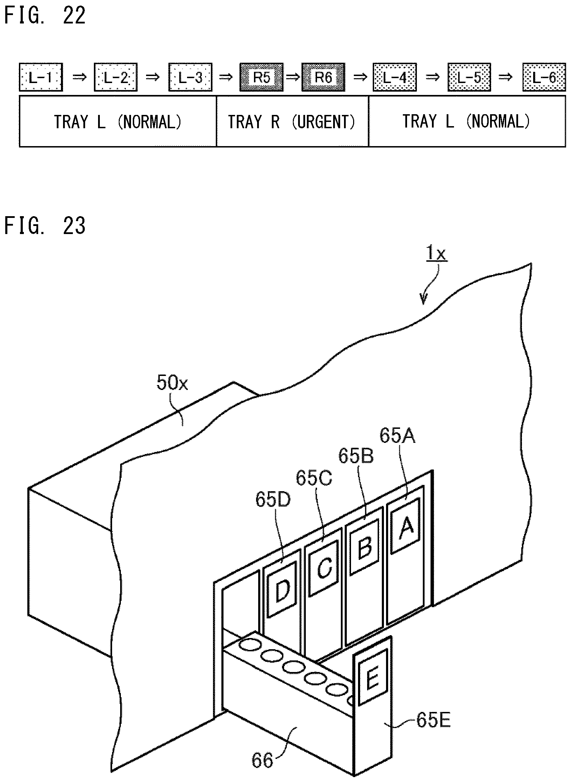

Hereinafter, a method for determining a priority of specimen measurement will be described with a specific example, with reference to FIG. 21 and FIG. 22 as appropriate.

In the method for determining the priority of specimen measurement according to the present embodiment, firstly, the priority of specimen measurement is determined on the basis of whether or not urgent measurement is specified. Secondly, the priority of specimen measurement is determined on the basis of a second criterion such as the time at which the specimen rack 66 is loaded. The urgent measurement being "specified" means that the measurement mode of the specimen is set in the urgent mode, and in the present embodiment, means that the urgent mode selection button 702 is operated on the order window 700. On the other hand, the urgent measurement being "unspecified" means that the measurement mode of the specimen is set to the normal mode.

When the urgent measurement is "specified", i.e., when the measurement mode of the specimen is set in the urgent mode, the controller 57 performs measurement of the specimen in the second specimen rack 66 in the urgent mode in preference to measurement of the specimen in the first specimen rack 66 in the normal mode. On the other hand, when the urgent measurement is "unspecified", i.e., when the measurement mode of the specimen is set to the normal mode, the controller 57 determines the priority of specimen measurement on the basis of the loading time of the specimen rack 66 into the specimen rack storage part 50. Specifically, the specimen in the specimen rack 66 that has an earlier loading time is preferentially measured.

The controller 57 determines the priority of measurement on the basis of the first priority criterion regarding the measurement mode. When the measurement modes of the specimen racks 66 stored in the specimen rack storage part 50 are the same, the controller 57 determines the priority of measurement on the basis of the second priority criterion regarding a condition other than the measurement mode. In determining the priority of specimen measurement, the first priority criterion is given preference over the second priority criterion, and the urgent specimen held in the specimen rack 66 in the urgent mode is measured in preference to the normal specimen held in the specimen rack 66 in the normal mode as long as interruption measurement of the urgent specimen is allowed.

A preferential measurement tray may be determined between the specimen rack tray 65a and the specimen rack tray 65b in the specimen rack storage part 50. For example, when specimen racks 66 are loaded on the specimen rack tray 65a and the specimen rack tray 65b almost at the same time, if the specimen rack tray 65a is set as the preferential measurement tray, the specimen in the specimen rack tray 65a is measured in preference to the specimen in the specimen rack tray 65b as long as the measurement modes of the specimen racks 66 are the normal mode. In this case, the places where the specimen racks 66 are set (specimen rack tray 65a, specimen rack tray 65b) become the second priority criterion.

The controller 57 preferably determines the priority of measurement on the basis of the first priority criterion regarding the measurement mode and the second priority criterion regarding time. When the specimen racks 66 stored in the specimen rack storage part 50 have the same measurement mode, the controller 57 preferentially performs measurement of the specimen that is held in the specimen rack 66 whose loading time into the specimen rack storage part 50 is earlier, for example, on the basis of the second priority criterion. The loading time of the specimen rack 66 into the specimen rack storage part 50 is not limited to the loading start time or the loading completion time of the specimen rack 66, and may be any time at which an operation for loading the specimen rack 66 is performed.

For example, the loading time regarding the second priority criterion is determined on the basis of at least one of: (1) a time at which completion of loading of the specimen rack 66 is detected by the origin sensor 533 disposed in the specimen rack storage part 50; (2) a time at which a specimen container 67 is detected by the sensor 534 (specimen presence/absence confirmation sensor) disposed in the specimen rack storage part 50; (3) a time at which the measurement start button 705 is operated; and (4) a time at which information on the specimen is inputted on the order window 700.

The times of the above (3) and (4) can be regarded as a time at which an operation for loading the specimen rack 66 is performed. In particular, the time of the above (3) can be regarded as a loading start time because, at this time, draw-in of the specimen rack 66 is started through an operation on the measurement start button 705. In the case where the host computer has, registered therein, information regarding the specimen, such as measurement items, in association with the specimen ID, it is not necessary to input information regarding the specimen on the order window 700, and any of the times of the above (1) to (3) is regarded as a loading time regarding the second priority criterion.

When a plurality of specimen racks 66 stored in the specimen rack storage part 50 have the same measurement mode, the controller 57 may preferentially perform measurement of a specimen whose arrival time at the laboratory is earlier, on the basis of the second priority criterion regarding time. Generally, specimens are carried to the laboratory in the collected order. Therefore, if a specimen whose arrival time at the laboratory is earlier can be preferentially measured, it becomes easy to perform measurement of the specimens in the collected order.

The time at which a specimen arrives at the laboratory is, for example, the time at which the specimen identification information 67a is read by an information reading device such as a barcode reader installed in the laboratory. Alternatively, in the case where an IC tag is attached to each specimen rack 66 or each specimen container 67 (or the specimen identification information 67a may be implemented as an IC tag) and an IC tag detector is installed at an entrance of the laboratory, the time at which the IC tag is detected may be regarded as the arrival time at the laboratory.

In addition to the loading time described above, the management number, status information, etc., of the specimen rack 66 may be used as the second priority criterion. For example, the controller 57 gives a serial number each time a specimen rack 66 is loaded into the specimen rack storage part 50, and when the specimen racks 66 stored in the specimen rack storage part 50 have the same measurement mode, the specimen in the specimen rack 66 whose serial number is smaller is preferentially measured. The serial number may include information such as the measurement date and the measurement device. Generally, serial numbers are given in the order of loading into the specimen rack storage part 50.

For example, the status information is set for each specimen rack 66 in the order of loading into the specimen rack storage part 50. A specimen rack 66 loaded earlier is given a status "A", and a specimen rack 66 loaded later is given a status "B". When the specimen measurement is ended and the specimen rack 66 is taken out, the status information is reset, and the specimen rack 66 that has been loaded later and is currently being measured comes to have the status A. Unless a specimen rack 66 in the urgent mode is loaded, the controller 57 performs measurement of the specimen in the specimen rack 66 of the status A in preference to the specimen in the specimen rack 66 of the status B.

FIG. 21 and FIG. 22 illustrate a specific example of the urgent mode, in a state where, while a first specimen rack 66 currently being measured in the normal mode is present on the left-side specimen rack tray 65a, a second specimen rack 66 in the urgent mode is loaded on the right-side specimen rack tray 65b.

As shown in FIG. 21 and FIG. 22, even after suction of the specimen in the first specimen rack 66 in the normal mode placed on the left-side specimen rack tray 65a has been started, if the second specimen rack 66 in the urgent mode is loaded on the right-side specimen rack tray 65b, the suction of the normal specimen is suspended and suction of the urgent specimen is preferentially performed. Here, the normal specimen means the specimen held in the first specimen rack 66 in the normal mode, and the urgent specimen means the specimen held in the second specimen rack 66 in the urgent mode.

In the example shown in FIG. 21 and FIG. 22, at the time when the second specimen rack 66 in the urgent mode is loaded into the specimen rack storage part 50, suction of three normal specimens held at L1 to L3 of the first specimen rack 66 in the normal mode has been completed. That is, three normal specimens held at L4 to L6 of the first specimen rack 66 have not been suctioned yet. Here, L1 to L6 indicate the positions of the holding portions 66b of the first specimen rack 66 placed on the left-side specimen rack tray 65a. Likewise, R1 to R6 indicate the positions of the holding portions 66b of the second specimen rack 66 placed on the right-side specimen rack tray 65b.

In the above state, the controller 57 suspends suction of the normal specimens at L4 to L6 of the first specimen rack 66, and preferentially performs suction of the urgent specimen held in the second specimen rack 66. In the example shown in FIG. 22, specimen containers 67 containing the urgent specimens to be subjected to interruption measurement are held at R5, R6 of the second specimen rack 66. That is, the controller 57 inserts measurement of the urgent specimens at R5, R6 of the second specimen rack 66, before measurement of the normal specimens at L4 to L6 of the first specimen rack 66. Then, suction of the normal specimens at L4 to L6 of the first specimen rack 66 is performed after suction of the urgent specimens at R5, R6 of the second specimen rack 66.

In the case where pre-measurement treatment for the normal specimen is in progress, the controller 57 performs measurement of the specimen regarding the pre-measurement treatment, and thereafter, preferentially performs measurement of the urgent specimen. As for the normal specimens at L1 to L3 of the first specimen rack 66, suction of these specimens has been completed, and these specimens are being subjected to temperature control in the heating part 90. In the present embodiment, measurement of the normal specimens at L1 to L3 is continued, and after the measurement, measurement of the urgent specimens at R5, R6 of the second specimen rack 66 is performed. Although it may be possible to discard the normal specimens at L1 to L3 and preferentially perform measurement of the urgent specimens at R5, R6, loss of specimens can be avoided by continuing measurement of the normal specimens for which pre-measurement treatment is in progress.

When the suction operation for the normal specimen is in progress, the controller 57 preferentially performs measurement of the urgent specimen after the suction of the normal specimen is completed. Although it may be possible to discard the suctioned normal specimen and preferentially perform measurement of the urgent specimens at R5, R6, loss of specimens can be avoided by continuing measurement for the suctioned normal specimen. In the case where the normal specimen has not yet been suctioned by the pipette 200 of the dispenser 190 but the pipette 200 has started to move toward L3 of the first specimen rack 66 at which the normal specimen is held, the controller 57 may suction the urgent specimen after suction of the normal specimen at L3 is completed.

After performing measurement of the urgent specimen held in the second specimen rack 66 as described above, the controller 57 performs measurement of the unmeasured normal specimen held in the first specimen rack 66. At this time, the operator need not perform any special operation, and measurement of the unmeasured normal specimen is automatically performed by the function of the controller 57. That is, when suction of the urgent specimens at R5, R6 of the second specimen rack 66 is completed, suction of the normal specimens at L4 to L6 of the first specimen rack 66 is automatically restarted, and measurement of the normal specimens at L4 to L6 is performed subsequently to measurement of the urgent specimens at R5, R6.

Hereinafter, another example of the present embodiment will be described with reference to FIG. 23 to FIG. 27. Hereinafter, the constituents common to those in the above embodiment are denoted by the same reference characters, and repetitive descriptions thereof are omitted.

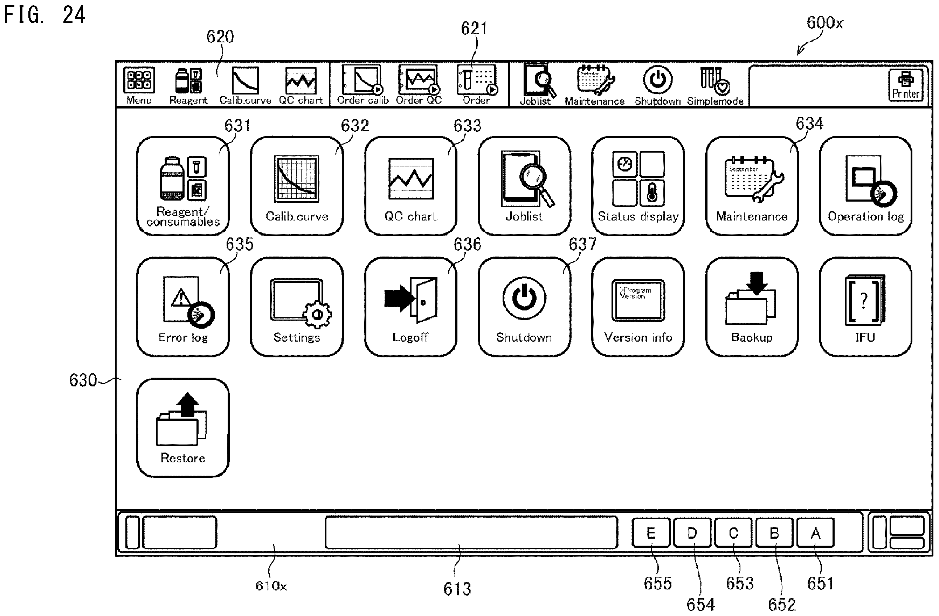

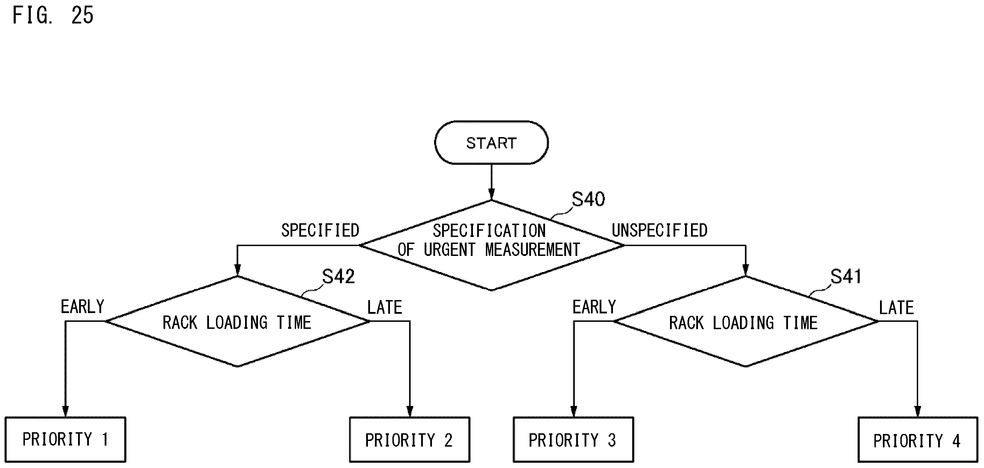

FIG. 23 shows a modification of the specimen rack storage part, and FIG. 24 shows a modification of the main menu window. FIG. 25 illustrates a method for determining priority of specimen measurement in the case where the specimen rack storage part includes three or more storages as shown in FIG. 23.

As shown in FIG. 23, a specimen measurement apparatus 1x according to another example of the present embodiment includes a specimen rack storage part 50x having three or more rack storages (trays) capable of taking in and out specimen racks 66 independently from each other. The specimen rack storage part 50x includes five specimen rack trays 65A to 65E each capable of storing one specimen rack 66 therein. The specimen rack storage part 50x including the trays 65A to 65E may have a manual rack take-in/out structure, but preferably, has an electric actuator that moves the specimen rack trays 65A to 65E in the front-rear direction Y. Similarly to the specimen rack trays 65a, 65b, the respective trays 65A to 65E are independently taken in and out according to an operation performed on the monitor 40 being the display.

When three or more trays are provided as in the specimen measurement apparatus 1x, setting of normal mode/urgent mode may be allowed to only specific trays (e.g., the trays 65A and 65B).

As shown in FIG. 24, a main menu window 600x is provided with five rack discharge buttons 651 to 655 corresponding to the five specimen rack trays 65A to 65E. The rack discharge buttons 651 to 655 are buttons for taking out specimen racks 66 from the trays 65A to 65E, and may have character information or the like for identifying the respective trays. For example, the operator can draw out the specimen rack tray 65A on which the specimen rack 66 is placed, by operating the rack discharge button 651, for example. When the rack discharge button 651 is operated, the actuator is actuated, and the specimen rack tray 65A is taken out from the specimen rack storage part 50x. Similarly to the rack discharge buttons 611, 612, the rack discharge buttons 651 to 655 may be included in a tool bar 610x of the main menu window 600x, and may be displayed on a plurality of windows including the main menu window 600x.

FIG. 25 illustrates a method for determining priority of specimen measurement in the specimen measurement apparatus 1x. As shown in FIG. 25, the specimen measurement apparatus 1x is similar to the specimen measurement apparatus 1 in that the priority of specimen measurement is firstly determined on the basis of whether or not the urgent measurement is specified (step S40). When the urgent measurement is specified in step S40, the controller 57 performs measurement of the specimen held in the specimen rack 66 in the urgent mode in preference to the specimen held in the specimen rack 66 in the normal mode that has been set in the specimen rack storage part 50x earlier. When the urgent measurement is not specified in step S40, the controller 57 determines the priority of specimen measurement on the basis of the loading time of the specimen rack 66 into the specimen rack storage part 50x (step S41).

The specimen measurement apparatus 1x is different from the specimen measurement apparatus 1 in that, even when the urgent measurement is specified, the priority of specimen measurement is determined on the basis of the second criterion (step S42). Since the five specimen rack trays 65A to 65E are present in the specimen measurement apparatus 1x, the urgent measurement may be specified for a plurality of specimen racks 66. In this case, as in the case of the specimen rack 66 in the normal mode, the priority of specimen measurement is determined on the basis of the loading time of the specimen rack 66 into the specimen rack storage part 50x (step S42), and preferential measurement of the specimen held in the specimen rack 66 whose loading time is earlier is performed.

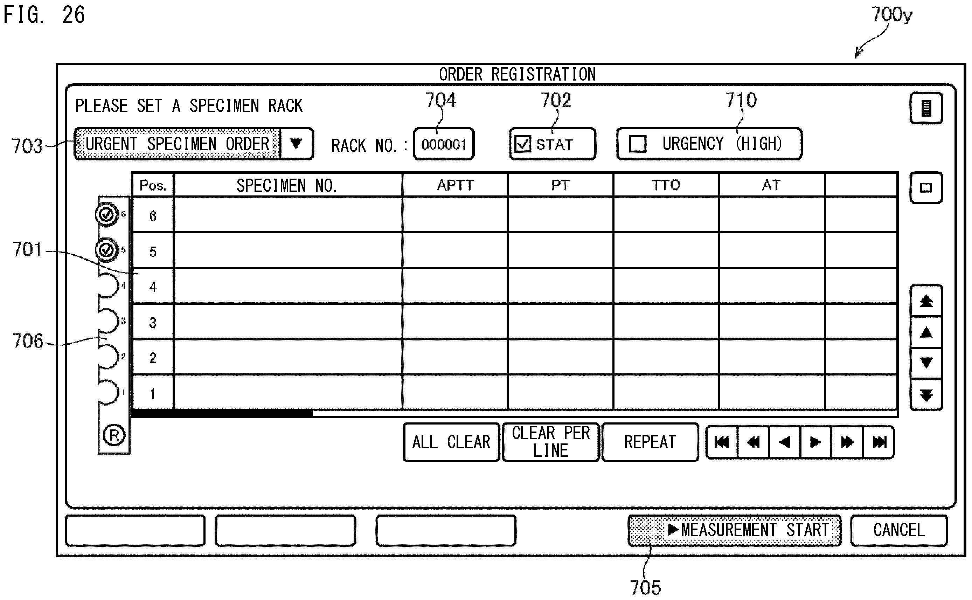

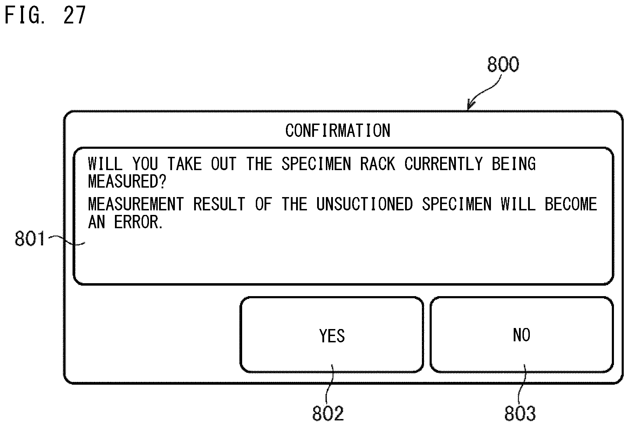

FIG. 26 shows a modification of the order window. An order window 700y exemplarily shown in FIG. 27 is similar to the aforementioned order window 700 in that the order window 700y includes the urgent mode selection button 702, the measurement start button 705, and the like. On the other hand, the order window 700y is different from the order window 700 in that the order window 700y includes a second urgent mode selection button 710. Like the first urgent mode selection button 702, the second urgent mode selection button 710 has a check box, for example. In addition, words "urgency (high)" are displayed on the second urgent mode selection button 710.

After the specimen rack 66 set in the urgent mode has been loaded into the specimen rack storage part through an operation performed on the first urgent mode selection button 702, the second urgent mode selection button 710 is used when interruption measurement is performed in preference to the urgent specimen in the specimen rack 66. That is, the second urgent mode selection button 710 is operated when the specimen rack 66 set in the urgent mode is set in the specimen rack storage part. The second urgent mode selection button 710 is preferably applied to a specimen measurement apparatus including three or more trays, like the specimen rack storage part 50x.

When the second urgent mode selection button 710 is operated, the controller 57 performs measurement of the second urgent specimen that is set through the operation on the second urgent mode selection button 710 in preference to the first urgent specimen that is set through the operation on the first urgent mode selection button 702. Although the method for interruption measurement of the second urgent specimen is similar to, for example, the interruption measurement of the first urgent specimen with respect to the normal specimen, it is also possible to suspend pre-measurement treatment and suction of the preceding specimen, and preferentially perform the interruption measurement of the second urgent specimen.

When pre-measurement treatment or suction of the normal specimen held in the specimen rack 66 in the normal mode is in progress, the controller 57 may suspend the pre-measurement treatment or suction, and preferentially perform measurement of the urgent specimen held in the second specimen rack 66 in the urgent mode. In this case, the controller 57 sets the measurement of the normal specimen whose pre-measurement treatment or suction has been suspended, to an error. The pre-measurement treatment or suction of the normal specimen being suspended enables the measurement result of the urgent specimen to be more quickly obtained. In addition, the interruption measurement that is performed with the pre-measurement treatment or suction of the normal specimen being suspended may be applied to measurement of the urgent specimen that is set through the operation on the second urgent mode selection button 710.

Measurement of the normal specimen whose pre-measurement treatment or suction has been suspended is performed after the measurement of the urgent specimen. At this time, the operator need not perform any special operation, and measurement of the unmeasured normal specimen is automatically performed by the function of the controller 57. For example, when suction of the urgent specimen is completed, the normal specimen whose pre-measurement treatment or suction has been suspended is suctioned, and measurement of the normal specimen is performed subsequently to the measurement of the urgent specimen.

FIG. 27 shows a confirmation window 800 in the case where the specimen rack 66 holding the specimen currently being measured is taken out from the specimen rack storage part. The confirmation window 800 includes an information display part 801, a take-out execution button 802, and a take-out suspension button 803. The information display part 801 displays information indicating that the specimen held in the specimen rack 66 to be taken out is currently being measured, and that measurement of the unsuctioned specimen will become an error. Take-out of the specimen rack 66 currently being measured can be performed by, for example, operating the rack discharge button, or operating a forced discharge button that is separately provided.

Based on an operation signal of the rack discharge button or the forcible discharge button, the controller 57 controls the actuator of the specimen rack storage part to draw out the specimen rack 66 currently being measured, and set measurement of the unsuctioned normal specimen to an error. When the confirmation window 800 is displayed on the monitor 40, take-out of the specimen rack 66 currently being measured is executed when an operation signal of the take-out execution button 802 is acquired. This function enables interruption measurement of the urgent specimen to be more quickly performed in the case where all the trays in the specimen rack storage part are used.

As described above, according to the specimen measurement apparatus of the above embodiment, interruption measurement of the urgent specimen can be easily and quickly performed. Since the urgent mode is set for each specimen rack, for example, preparation of a barcode for the urgent specimen, manual input of necessary information, etc., become unnecessary, whereby the burden on the operator is reduced. In addition, errors due to manual input, etc., are not likely to occur, and special equipment for interruption measurement, such as racks and trays for urgent specimens, is dispensed with.

The above embodiment can be changed in terms of design as appropriate unless the object of the present invention is impaired. For example, in the above embodiment, setting of the urgent mode is performed on the basis of an operation on the measurement mode selection button (urgent mode selection buttons 702, 710). However, setting of the urgent mode may be performed on the basis of another method. An example of the other method is reading identification information (e.g., barcode) for urgent measurement that is pasted to the specimen rack 66 or the specimen container 67. In this case as well, the measurement mode is set for each specimen rack as in the above embodiment.

In the above embodiment, the specimen rack 66 is loaded into the specimen rack storage part while placed on the specimen rack trays 65a, 65b. However, a specimen rack may be fixed to each tray. In this case as well, the specimen rack fixed to each tray can be taken in and out with respect to a housing, and the operator can set specimen containers in the rack drawn out from the housing.

The configuration of the specimen measurement apparatus, the configuration of the information reading device, and the information reading method according to the present invention are also applicable to apparatuses performing blood immunoassay, cell number measurement, biochemical analysis, urine analysis, etc., which are specimen measurements other than blood coagulation measurement.

### [Remarks]

The present disclosure includes following items 1-15.

Item 1: A specimen measurement apparatus configured to measure a specimen, comprising:
a housing;
a first rack tray configured to store therein a rack capable of holding a plurality of specimen containers, the first rack tray being able to be taken in and out with respect to the housing;
a second rack tray configured to store therein a rack capable of holding a plurality of specimen containers, the second rack tray being able to be taken in and out with respect to the housing, independently from the first rack tray; and
a controller programmed to perform a process related to measurement of the specimen, according to a normal mode or an urgent mode that is set as specimen measurement mode for each of the racks, the urgent mode being higher in urgency in measurement than the normal mode, wherein
when a rack in the normal mode and a rack in the urgent mode are stored in the housing, the controller preferentially performs measurement of the specimen held in the rack in the urgent mode.

Item 2: The specimen measurement apparatus of item 1, further comprising an input part configured to allow selection of the measurement mode for each of the racks, wherein
when the urgent mode is selected through the input part, the controller preferentially performs, in the urgent mode, measurement of the specimen held in the corresponding rack.

Item 3: The specimen measurement apparatus of item 2, wherein
when the urgent mode is not selected, the controller performs, in the normal mode, measurement of the specimen held in the corresponding rack.

Item 4: The specimen measurement apparatus of item 1, further comprising a display configured to display an order window including a measurement start button, wherein
the order window includes a measurement mode selection button for selecting the measurement mode for each of the racks.

Item 5: The specimen measurement apparatus of item 4, wherein
the measurement mode selection button is a button for selecting whether or not the urgent mode can be applied for each of the racks.

Item 6: The specimen measurement apparatus of item 1, wherein
the controller
determines a priority of measurement on the basis of a first priority criterion regarding the measurement mode, and
when the measurement modes of the racks stored in the housing are the same, determines a priority of measurement on the basis of a second priority criterion regarding a condition other than the measurement mode.

Item 7: The specimen measurement apparatus of item 1, wherein
the controller
determines a priority of measurement on the basis of a first priority criterion regarding the measurement mode, and a second priority criterion regarding time, and
when the measurement modes of the racks stored in the housing are the same, preferentially performs measurement of the specimen held in the rack that has been loaded into the housing at an earlier loading time, on the basis of the second priority criterion.

Item 8: The specimen measurement apparatus of item 7, wherein
the loading time regarding the second priority criterion is determined on the basis of at least one of: a time at which completion of loading of the rack is detected by an origin sensor disposed in the housing; a time at which the specimen container is detected by a sensor disposed in the housing; a time at which a measurement start button is operated; and a time at which information on the specimen is inputted through an input unit.

Item 9: A specimen measurement apparatus of item 1, wherein
the controller
determines a priority of measurement on the basis of a first priority criterion regarding the measurement mode, and a second priority criterion regarding time, and
when the measurement modes of the racks stored in the housing are the same, preferentially performs measurement of the specimen that has arrived at a laboratory at an earlier time, on the basis of the second priority criterion.

Item 10: The specimen measurement apparatus of item 1, further comprising:
an actuator configured to cause the first rack tray and the second rack tray to be taken in and out with respect to the housing; and
a rack discharge button for taking out the first rack tray and the second rack tray from the housing, wherein
the rack discharge button is provided with indicators indicating states of the racks stored in the housing, and states of the specimens held in the racks.

Item 11: The specimen measurement apparatus of item 10, further comprising a display configured to display a plurality of windows, wherein
the rack discharge button is displayed on at least one window selected from among the plurality of windows.

Item 12: The specimen measurement apparatus of item 11, wherein
the rack discharge button is displayed on the plurality of windows.

Item 13: The specimen measurement apparatus of item 1, further comprising a display configured to display a status and a result of reading of specimen identification information for each of specimen holding positions in the racks.

Item 14: The specimen measurement apparatus of item 1, wherein
in a series of processes related to measurement of the specimen, when pre-measurement treatment of the specimen held in the rack in the normal mode is in progress, the controller performs measurement of the specimen regarding the pre-measurement treatment, and thereafter, preferentially performs measurement of the specimen held in the rack in the urgent mode.

Item 15: The specimen measurement apparatus of item 1, wherein
in a series of processes related to measurement of the specimen, when suction of the specimen held in the rack in the normal mode is in progress, the controller, after suction of the specimen is completed, preferentially performs measurement of the specimen held in the rack in the urgent mode.

### DESCRIPTION OF THE REFERENCE CHARACTERS

1 specimen measurement apparatus
10 housing
20 front surface part
21 rear surface part
22 right side surface part
23 left side surface part
24 upper surface part
25 bottom surface part
30 cover
31, 33 opening
32, 34 lid
40 monitor
50 specimen rack storage part
51 reaction container storage part
52 reagent rack storage part
53 measurement part
54 washing part
55 disposal part
56 power supply
57 controller
58 dispenser
59, 59a, 59b information reading device
60 cover member
60a opening
61 upper surface part
62 dispensing hole
63 left side surface part
64 right side surface part
65a, 65b specimen rack tray
66 specimen rack
66a bottom portion
66b holding portion
66c wall
66d specimen rack identification information
7 specimen container
67d specimen identification information
70 reaction container
71 container rack
80 cover member
81 upper surface portion
82 dispensing hole
83 cooling part
84 heat discharging part
85 reagent rack tray
90 heater
91 detector
100 cover member
100a upper surface portion
101 hole
120 holding hole
121 first holder
122 heat source
130 holding hole
131 second holder
140 light source
141 detector
160 washing chamber
170 disposal port
180 vertical wall
190 dispenser
191 movement unit
200 pipette
201 container holding part
202 movement mechanism
210 tip portion
220 holding arm
250 first movement part
251 second movement part
252 interlocking part
253 drive source
260 plate-shaped member
260a first plate surface
260b second plate surface
270 pipette holding member
271 first lifting member
272 first guide rail
280 pipe
300 second lifting member
301 urging member
302 stopper
303 pressing member
304 second guide rail
310 body portion
311 arm portion
320, 321 pulley
322 belt
330, 331 belt portion
350 vibration member
360 heating member
509a, 509b base portion
510a, 510b rack placement portion
511a, 511b rear light-blocking wall
512a, 512b front light-blocking wall
513a, 513b pressing part
514a, 514b rail portion
520a slider portion
521a, 521b actuator
530a, 530b motor
531a pulley
532a, 532b belt
533 origin sensor
534 sensor
535a metal fitting
600 main menu window
610 first tool bar
611 first rack discharge button
611a, 612a indicator
611b, 612b mark
612 second rack discharge button
613 information display part
620 second tool bar
621 third rack discharge button
630 menu display area
631 reagent/consumables icon
632 calibration curve icon
633 QC chart icon
634 maintenance icon
635 error log icon
636 logoff icon
637 shutdown icon
700 order window
701 order registration part
702 urgent mode selection button
703 measurement mode display part
704 rack identification information display part
705 measurement start button
706 reading result display part

## Claims

1. A specimen measurement apparatus configured to measure a specimen, comprising:
a housing;
a first rack tray configured to store therein a rack capable of holding a plurality of specimen containers, the first rack tray being able to be taken in and out with respect to the housing;
a second rack tray configured to store therein a rack capable of holding a plurality of specimen containers, the second rack tray being able to be taken in and out with respect to the housing, independently from the first rack tray; and
a controller programmed to perform a process related to measurement of the specimen, according to a normal mode or an urgent mode that is set as specimen measurement mode for each of the racks, the urgent mode being higher in urgency in measurement than the normal mode, wherein
when a rack in the normal mode and a rack in the urgent mode are stored in the housing, the controller preferentially performs measurement of the specimen held in the rack in the urgent mode.

2. The specimen measurement apparatus of claim 1, further comprising an input part configured to allow selection of the measurement mode for each of the racks, wherein
when the urgent mode is selected through the input part, the controller preferentially performs, in the urgent mode, measurement of the specimen held in the corresponding rack.

3. The specimen measurement apparatus of claim 2, wherein
when the urgent mode is not selected, the controller performs, in the normal mode, measurement of the specimen held in the corresponding rack.

4. The specimen measurement apparatus of claim 1, further comprising a display configured to display an order window including a measurement start button, wherein
the order window includes a measurement mode selection button for selecting the measurement mode for each of the racks.

5. The specimen measurement apparatus of claim 4, wherein
the measurement mode selection button is a button for selecting whether or not the urgent mode can be applied for each of the racks.

6. The specimen measurement apparatus of claim 1, wherein
the controller
determines a priority of measurement on the basis of a first priority criterion regarding the measurement mode, and
when the measurement modes of the racks stored in the housing are the same, determines a priority of measurement on the basis of a second priority criterion regarding a condition other than the measurement mode.

7. The specimen measurement apparatus of claim 1, wherein
the controller
determines a priority of measurement on the basis of a first priority criterion regarding the measurement mode, and a second priority criterion regarding time, and
when the measurement modes of the racks stored in the housing are the same, preferentially performs measurement of the specimen held in the rack that has been loaded into the housing at an earlier loading time, on the basis of the second priority criterion.

8. The specimen measurement apparatus of claim 7, wherein
the loading time regarding the second priority criterion is determined on the basis of at least one of: a time at which completion of loading of the rack is detected by an origin sensor disposed in the housing; a time at which the specimen container is detected by a sensor disposed in the housing; a time at which a measurement start button is operated; and a time at which information on the specimen is inputted through an input unit.

9. A specimen measurement apparatus of claim 1, wherein
the controller
determines a priority of measurement on the basis of a first priority criterion regarding the measurement mode, and a second priority criterion regarding time, and
when the measurement modes of the racks stored in the housing are the same, preferentially performs measurement of the specimen that has arrived at a laboratory at an earlier time, on the basis of the second priority criterion.

10. The specimen measurement apparatus of claim 1, further comprising:
an actuator configured to cause the first rack tray and the second rack tray to be taken in and out with respect to the housing; and
a rack discharge button for taking out the first rack tray and the second rack tray from the housing, wherein
the rack discharge button is provided with indicators indicating states of the racks stored in the housing, and states of the specimens held in the racks.

11. The specimen measurement apparatus of claim 10, further comprising a display configured to display a plurality of windows, wherein
the rack discharge button is displayed on at least one window selected from among the plurality of windows.

12. The specimen measurement apparatus of claim 11, wherein
the rack discharge button is displayed on the plurality of windows.

13. The specimen measurement apparatus of claim 1, further comprising a display configured to display a status and a result of reading of specimen identification information for each of specimen holding positions in the racks.

14. The specimen measurement apparatus of claim 1, wherein
in a series of processes related to measurement of the specimen, when pre-measurement treatment of the specimen held in the rack in the normal mode is in progress, the controller performs measurement of the specimen regarding the pre-measurement treatment, and thereafter, preferentially performs measurement of the specimen held in the rack in the urgent mode.

15. The specimen measurement apparatus of claim 1, wherein
in a series of processes related to measurement of the specimen, when suction of the specimen held in the rack in the normal mode is in progress, the controller, after suction of the specimen is completed, preferentially performs measurement of the specimen held in the rack in the urgent mode.
